(19) Europäisches Patentamt
European Patent Office
Office européen des brevets

(11) **EP 4 394 008 A1**

(12) **EUROPEAN PATENT APPLICATION**

(43) Date of publication:
**03.07.2024 Bulletin 2024/27**

(21) Application number: **23217349.2**

(22) Date of filing: **15.12.2023**

(51) International Patent Classification (IPC):
***C09D 11/54*** *(2014.01)* ***C09D 11/102*** *(2014.01)*
***C09D 11/322*** *(2014.01)* ***C09D 11/38*** *(2014.01)*
***C09D 11/40*** *(2014.01)* ***D06P 5/30*** *(2006.01)*
***D06P 5/00*** *(2006.01)* ***D06P 5/20*** *(2006.01)*
***D06P 1/44*** *(2006.01)* ***D06P 1/52*** *(2006.01)*
***D06P 1/673*** *(2006.01)*

(52) Cooperative Patent Classification (CPC):
**D06P 5/30; C09D 11/102; C09D 11/322; C09D 11/38; C09D 11/40; C09D 11/54; D06P 1/44; D06P 1/525; D06P 1/5285; D06P 1/6735; D06P 5/002; D06P 5/2077**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **27.12.2022 JP 2022209992**
**07.11.2023 JP 2023190012**

(71) Applicant: **Ricoh Company, Ltd.**
**Tokyo 143-8555 (JP)**

(72) Inventors:
- **HIRADE, Tomohiro**
**Tokyo, 143-8555 (JP)**
- **KURONUMA, Makoto**
**Tokyo, 143-8555 (JP)**
- **MATSUMOTO, Ayaka**
**Tokyo, 143-8555 (JP)**

(74) Representative: **Marks & Clerk LLP**
**15 Fetter Lane**
**London EC4A 1BW (GB)**

(54) **IMAGE RECORDING METHOD AND PRINTING METHOD**

(57) An image recording method is provided that includes: firstly applying (S1) a first treatment liquid containing water and substantially free of organic solvent to a fabric; secondly applying (S2) a second treatment liquid containing water, a water-soluble solvent, and a flocculant to an area in which the first treatment liquid has been applied; and thirdly applying (S3) an ink to an area in which the second treatment liquid has been applied. In the method, drying is not performed between the firstly applying and the secondly applying, and between the secondly applying and the thirdly applying.

FIG. 2

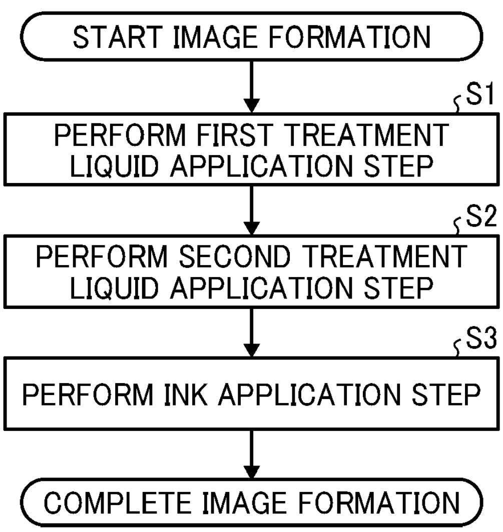


EP 4 394 008 A1

## Description

BACKGROUND

Technical Field

The present disclosure relates to an image recording method and a printing method.

Related Art

In recent years, in the textile printing field, the market size of the so-called DTG (Direct to Garment) field, in which text is directly printed onto clothing such as a T-shirt, has been expanding year by year. Furthermore, trends in recent years such as the rise of personal recommendation businesses in the apparel industry, and the growth of collaborations with fine art that has been observed in the interior textile field have led to an even higher level of demand for inkjet recording systems that are capable of forming images having excellent color development and various types of robustness on a fabric.

Unlike screen textile printing and other types of conventional textile printing, a textile printing method that uses an ink containing a pigment as a colorant to create images directly on a fabric by inkjet printing has advantages in that consideration does not need to be given to the creation, storage, and cleaning of a plate, it is suitable for low-volume, high-mix production, the delivery time can be shortened because processes such as transfer are not included, and an excellent light resistance can be obtained. In pigment textile printing, various studies have been performed in order to improve the color development, the robustness, and the like of a printed matter. However, it is difficult to satisfy these properties with ink alone, and in recent years, a method has been proposed in which pretreatment is performed with respect to the fabric before ink is printed on the fabric.

Japanese Unexamined Patent Application Publication No. 2020-139242 discloses a production method of a printed textile, including: coating a cloth with a first pretreatment liquid containing water and an ink flocculant; applying to the cloth a second pretreatment liquid having a smaller ink aggregation power than the first pretreatment liquid; and inkjet printing the cloth using a water-based inkjet ink.

WO2021/055700 discloses a printing method of a printed textile, including: applying a treatment liquid containing a polyvalent cation salt or an acid; applying by inkjet a clear ink containing a resin; applying by inkjet a white ink; and applying by inkjet a color ink.

However, when printing an image on a fabric, it is difficult to achieve both concealability of the fabric base by ink application and robustness of a printed matter without stickiness of the printed matter.

SUMMARY

An object of the present invention is to provide an image recording method that, when an image is printed on a fabric, improves and achieves both concealability of the fabric base and robustness of a printed matter without stickiness of the printed image.

An image recording method according to an embodiment of the present invention includes: firstly applying a first treatment liquid containing water and substantially free of organic solvent to a fabric; secondly applying a second treatment liquid containing water, a water-soluble solvent, and a flocculant to an area in which the first treatment liquid has been applied; and thirdly applying an ink to an area in which the second treatment liquid has been applied, wherein drying is not performed between the firstly applying and the secondly applying, and between the secondly applying and thirdly applying.

According to embodiments of the present invention, an image recording method is provided that, when an image is printed on a fabric, improves and achieves both concealability of the fabric base and robustness of a printed matter without stickiness of the printed image.

BRIEF DESCRIPTION OF THE DRAWINGS

A more complete appreciation of embodiments of the present disclosure and many of the attendant advantages and features thereof can be readily obtained and understood from the following detailed description with reference to the accompanying drawings, wherein:

FIG. 1A is a schematic explanatory diagram illustrating an image recording device according to an embodiment of the present invention;

FIG. 1B is a schematic explanatory diagram illustrating an image recording device according to an embodiment of

the present invention;

FIG. 2 is a flowchart illustrating an operation of the image recording device illustrated in FIG. 1A or FIG. 1B;

FIG. 3 is a schematic explanatory diagram illustrating an overview of control in the image recording device illustrated in FIG. 1A or FIG. 1B; and

FIG. 4 is a schematic cross-sectional view of an ink cartridge according to an embodiment of the present invention.

The accompanying drawings are intended to depict embodiments of the present disclosure and should not be interpreted to limit the scope thereof. The accompanying drawings are not to be considered as drawn to scale unless explicitly noted. Also, identical or similar reference numerals designate identical or similar components throughout the several views.

DETAILED DESCRIPTION

In describing embodiments illustrated in the drawings, specific terminology is employed for the sake of clarity. However, the disclosure of this specification is not intended to be limited to the specific terminology so selected and it is to be understood that each specific element includes all technical equivalents that have a similar function, operate in a similar manner, and achieve a similar result.

Referring now to the drawings, embodiments of the present disclosure are described below. As used herein, the singular forms "a," "an," and "the" are intended to include the plural forms as well, unless the context clearly indicates otherwise.

Unlike printing on film or paper, printing on a fabric often requires concealability of the fabric base and robustness of the printed matter.

To increase the concealability of the fabric base, the attached amount of a pretreatment liquid should be increased. On the other hand, a conventional pretreatment liquid contains an organic solvent. Therefore, in a wet-on-wet printing method in which an ink is printed on a fabric using a conventional pretreatment liquid, the printed matter remains sticky when performing a drying step, and it is difficult to sufficiently fix the ink to the fabric. Further, it is difficult to achieve both concealability of the fabric base and robustness of the printed matter.

The inventors of the present invention have completed the present invention in order to solve the problems described above.

An image recording method according to an embodiment of the present invention includes: firstly applying a first treatment liquid containing water and substantially free of organic solvent to a fabric; secondly applying a second treatment liquid containing water, a water-soluble solvent, and a flocculant to an area in which the first treatment liquid has been applied; and thirdly applying an ink to an area in which the second treatment liquid has been applied, wherein drying is not performed between the firstly applying and the secondly applying, and between the secondly applying and thirdly applying.

Hereinafter, embodiments of the present invention will be described in more detail.

(Image Recording Method)

An image recording method according to embodiments of the present invention includes: firstly applying a first treatment liquid containing water and substantially free of organic solvent to a fabric (hereinafter "first step"); secondly applying, after the first step, a second treatment liquid containing water, a water-soluble solvent, and a flocculant to an area in which the first treatment liquid has been applied (hereinafter "second step"); and thirdly applying, after the second step, an ink to an area in which the second treatment liquid has been applied (hereinafter "third step"), wherein a drying step is not provided between the first step and the second step, and between the second step and the third step.

Such a situation in which a drying step is not provided between the first step and the second step, and between the second step and the third step (this situation is sometimes referred to as "wet-on-wet-on-wet"), more specifically indicates that the second treatment liquid is attached after attaching the first treatment liquid while the surface temperature of the fabric is 32°C or lower ("second step"), and the ink is attached after attaching the second treatment liquid while the surface temperature of the fabric is 32°C or lower ("third step").

If a drying step is provided at least between the first step and the second step, or between the second step and the third step, the concealability of the fabric base will be reduced.

<Fabric>

Herein, the term "fabric" represents fibers in the form of a woven fabric, a knitted fabric, a nonwoven fabric, and the like. There are no limitations on the thickness of the fibers or the size of the mesh.

The fibers are not particularly limited and can be selected according to the intended purpose. Examples of

fibers include, but are not limited to, natural fibers, chemical fibers, biodegradable fibers, or blended fibers thereof, but chemical fibers are particularly preferable.

Examples of natural fibers include, but are not limited to, fibers made of cotton, hemp, wool, and silk, and blended fibers thereof.

Examples of chemical fibers include, but are not limited to, recycled fibers, synthetic fibers, semi-synthetic fibers, and blended fibers thereof, but synthetic fibers are particularly preferable.

Examples of recycled fibers include, but are not limited to, fibers made of viscose, lyocell, polynosic, rayon, and cupro, and blended fibers thereof.

Examples of synthetic fibers include, but are not limited to, polypropylene, polyester, acetate, triacetate, polyurethane, polyamide, polyimide, acrylic, polyvinyl alcohol, polyvinyl chloride, nylon, Nomex (registered trademark) (manufactured by DuPont), and Kevlar (registered trademark) (manufactured by Dupont), and blended fibers thereof. However, synthetic fibers made of polyester are particularly preferable.

Examples of semi-synthetic fibers include, but are not limited to, fibers made of acetate, diacetate, and triacetate, and blended fibers thereof.

Examples of biodegradable fibers include, but are not limited to, fibers made of polylactic acid.

Among the fibers that form the fabric, it is more difficult to use synthetic fibers such as polyester than natural fibers such as cotton to achieve a high fabric concealability when an ink is made the base layer, and it is also considered to be difficult to also achieve robustness. However, the first treatment liquid and the second treatment liquid used in the image recording method of the present embodiment are advantageous in that preferable activity is also obtained with respect to such fabrics, and a high base concealability and robustness are ensured.

The fabric is preferably a dark-colored or light-colored fabric, is more preferably a dark-colored or light-colored chemical fiber fabric containing chemical fibers, and is even more preferably a dark-colored or light-colored polyester fabric containing polyester.

Herein, "dark-colored fabric" refers to a fabric with a low lightness having an L* value of 50 or less in the L*a*b* color space, and "light-colored fabric" refers to a fabric with a higher lightness than the "dark-colored fabric" described above, and having an L* value of more than 50 and less than 100 in the L*a*b* color space.

The L*a*b* color space is standardized by the Commission Internationale de l'Eclairage (CIE). In the L*a*b* color space, lightness is expressed as L*, and the chromaticity representing the hue and saturation is expressed as a*b*. Further, a*b* represents the color direction, where a* represents the red direction, -a* represents the green direction, b* represents the yellow direction, and -b* represents the blue direction.

The "dark-colored polyester fabric" refers to a polyester fabric colored with a disperse dye having a color other than white (for example, black, red, blue, or pink), and the "light-colored polyester fabric" refers to a polyester fabric colored with a disperse dye having a color (such as light pink, light blue, yellow, or beige) or is white.

<First Step>

The first step is a step for applying a first treatment liquid containing water and substantially free of organic solvent to a fabric.

The method of applying the first treatment liquid to the fabric is not particularly limited, and examples include, but are not limited to, an inkjet method, a blade coating method, a gravure coating method, a bar coating method, a roll coating method, a dip coating method, a curtain coating method, a slide coating method, a die coating method, and a spray coating method. Among these, the spray coating method is preferable.

The attached amount of the first treatment liquid is preferably 5 mg/cm$^2$ or more and 12 mg/cm$^2$ or less. Within the above range, the concealability of the fabric base can be improved while preventing bleeding.

<<First Treatment Liquid>>

The first treatment liquid contains water, and is substantially free of organic solvent.

In the present embodiment, by using the first treatment liquid, the amount of the second treatment liquid used is reduced compared to a case where only the second treatment liquid is used. Therefore, the amount of water-soluble solvent applied to the fabric is reduced, which makes the printed matter easier to dry and less likely to become sticky.

Furthermore, by using the first treatment liquid, the concealability of the fabric base can be improved. This is assumed to be because, by using the first treatment liquid, the fabric is in a state where it has already absorbed liquid before the second treatment liquid is applied, which makes it more difficult for the second treatment liquid to be absorbed into the fabric, and more likely for the flocculant to be present at the fabric surface. As a result, it is more likely for the ink to react with the flocculant at the fabric surface before permeating into the fabric, and more likely for the pigment component to stay at the fabric surface.

- Water -

As the water included in the first treatment liquid, for example, distilled water, ion-exchanged water, ultrafiltrated water, reverse osmosis water, pure water, and ultrapure water can be used.
The water content in the first treatment liquid is not particularly limited and can be appropriately selected according to the intended purpose. However, from the viewpoint of the drying properties of the first treatment liquid, the water content is preferably 50.0% by mass or more and 100.0% by mass or less, more preferably 60.0% by mass or more and 100.0% by mass or less, and even more preferably 70.0% by mass or more and 100.0% by mass or less, with respect to the mass of the first treatment liquid.

- Organic Solvent -

The first treatment liquid is substantially free of organic solvent.
Here, "substantially free of organic solvent" means that the content of the organic solvent in the first treatment liquid is less than 1%.
The first treatment liquid preferably contains a surfactant, and also preferably contains at least one of a lubricant and a thickener. The first treatment liquid more preferably contains a urethane-modified polyether polymer as the thickener.
Furthermore, if preferable, the first treatment liquid may contain other components.

- Surfactant -

The first treatment liquid preferably contains a surfactant.
The content of the surfactant that can be included in the first treatment liquid is not particularly limited and can be appropriately selected according to the intended purpose. However, from the viewpoint of obtaining superior wettability and discharge stability, the content is preferably 0.001% by mass or more and 5% by mass or less, and is more preferably 0.05% by mass and 5% by mass or less, with respect to the total amount of the first treatment liquid.
Examples of surfactants that can be used, include, but are not limited to, silicone surfactants, fluorine surfactants, amphoteric surfactants, nonionic surfactants, and anionic surfactants. However, silicone surfactants are particularly preferable.
When the first treatment liquid contains a silicone surfactant, the wettability of the printed matter improves and a uniform state can be obtained, which enables the concealability of the fabric base to be improved.
The surfactant is preferably included in the first treatment liquid in a dissolved form.

-- Silicone Surfactant --

The silicone surfactants that can be included in the first treatment liquid are not particularly limited and can be appropriately selected according to the intended purpose. Silicone surfactants that do not decompose even at high pH are preferable.
Examples of silicone surfactants include, but are not limited to, side chain-modified polydimethylsiloxane, polydimethylsiloxane modified at both ends, polydimethylsiloxane modified at one end, and polydimethylsiloxane modified at both side chain ends.
As the modifying group in the siloxane, modifying groups having a polyoxyethylene group or a polyoxyethylene polyoxypropylene group are particularly preferable because good properties as a water-based surfactant are exhibited, and polyether-modified silicone surfactants are particularly preferable because good properties as a water-based surfactant are exhibited.
Examples of the polyether-modified silicone surfactant include, but are not limited to, compounds in which a polyalkylene oxide structure is introduced into an Si side chain of dimethylsiloxane.
Such surfactants may be synthesized as appropriate, or commercially available products may be used. For example, commercially available products are available from BIC Chemie Co., Ltd., Shin-Etsu Chemical Co., Ltd., Toray Dow Corning Silicone Co., Ltd., Nippon Emulsion Co., Ltd., and Kyoeisha Chemical Co., Ltd.
The polyether-modified silicone surfactant is not particularly limited and can be appropriately selected according to the intended purpose. Examples thereof include, but are not limited to, polyether-modified silicone surfactants in which a polyalkylene oxide structure is introduced into an Si side chain of dimethyl polysiloxane.

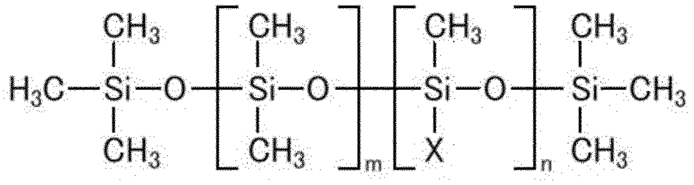 (S-1)

$$X = -R(C_2H_4O)_a (C_3H_6O)_b R'$$

(In the general formula (S-1) above, m, n, a, and b each independently represent an integer, R represents an alkylene group, and R' represents an alkyl group.)

It is possible to use a commercially available product as the polyether-modified silicone surfactant, and examples include, but are not limited to, KF-618, KF-642, and KF-643 (manufactured by Shin-Etsu Chemical Co., Ltd.), EMALEX-SS-5602 and SS-1906EX (manufactured by Nippon Emulsion Co., Ltd.), FZ-2105, FZ-2118, FZ-2154, FZ-2161, FZ-2162, FZ-2163, and FZ-2164 (manufactured by Toray Dow Corning Silicone Co., Ltd.), BYK-33, and BYK-387 (manufactured by BYK Chemie Corporation), and TSF4440, TSF4452, and TSF4453 (manufactured by Toshiba Silicon Corporation).

-- Fluorine Surfactant --

As the fluorine surfactant that can be included in the first treatment liquid, for example, perfluoroalkyl sulfonic acid compounds, perfluoroalkyl carboxylic acid compounds, perfluoroalkyl phosphate ester compounds, perfluoroalkyl ethylene oxide adducts, and polyoxyalkylene ether polymer compounds having a perfluoroalkyl ether group in the side chain are preferable because low foaming properties are exhibited.

Examples of perfluoroalkylsulfonic acid compounds include, but are not limited to, perfluoroalkylsulfonic acid and perfluoroalkylsulfonic acid salts. Examples of perfluoroalkylcarboxylic acid compounds include, but are not limited to, perfluoroalkylcarboxylic acid and perfluoroalkylcarboxylic acid salts.

Examples of polyoxyalkylene ether polymer compounds having a perfluoroalkyl ether group in the side chain include, but are not limited to, sulfate ester salts of polyoxyalkylene ether polymers having a perfluoroalkyl ether group in the side chain, and salts of polyoxyalkylene ether polymers having a perfluoroalkyl ether group in the side chain.

Counterions of the salts in the fluorine surfactant include, but are not limited to, Li, Na, K, $NH_4$, $NH_3CH_2CH_2OH$, $NH_2(CH_2CH_2OH)_2$, and $NH(CH_2CH_2OH)_3$.

The fluorine surfactant that can be included in the first treatment liquid is preferably a fluorine-substituted compound having 2 to 16 carbon atoms, and is more preferably a fluorine-substituted compound having 4 to 16 carbon atoms.

Examples of fluorine surfactants include, but are not limited to, perfluoroalkyl phosphate ester compounds, perfluoroalkyl ethylene oxide adducts, and polyoxyalkylene ether polymer compounds having a perfluoroalkyl ether group in the side chain.

Among these, polyoxyalkylene ether polymer compounds having a perfluoroalkyl ether group in the side chain are preferable because low foaming properties are exhibited, and fluorine surfactants represented by the general formula (F-1) and the general formula (F-2) below are particularly preferable.

$$CF_3CF_2(CF_2CF_2)_m -CH_2CH_2O(CH_2CH_2O)_n H \qquad (F-1)$$

In the compound represented by the general formula (F-1) above, in order to impart water solubility, m is preferably an integer of 0 to 10, and n is preferably an integer of 0 to 40.

$$C_nF_{2n+1}\text{-}CH_2CH(OH)CH2\text{-}O\text{-}(CH_2CH_2O)_a\text{-}Y \qquad (F-2)$$

In the compound represented by the general formula (F-2) above, Y represents H, or $C_mF_{2m+1}$ where m represents an integer of 1 to 6, or $CH_2CH(OH)CH_2\text{-}C_mF_{2m+1}$ where m is an integer of 4 to 6, or $C_pH_{2p+1}$ where p represents an integer of 1 to 19. n is an integer from 1 to 6. a is an integer from 4 to 14.

Commercially available products may be used as the fluorine surfactant described above. Examples of commercially available products include, but are not limited to, Surflon S-111, S-112, S-113, S-121, S-131, S-132, S-141, and S-145 (all manufactured by Asahi Glass Co., Ltd.); Fluorad FC-93, FC-95, FC-98, FC-129, FC-135, FC-170C, FC-430, and FC-431 (all manufactured by Sumitomo 3M Ltd.); MegaFac F-470, F-1405, and F-474 (all manufactured by DIC Corp.); Zonyl TBS, FSP, FSA, FSN-100, FSN, FSO-100, FSO, FS-300, UR, CAPSTONE FS-30, FS-31, FS-3100, FS-34, and FS-35 (all manufactured by Chemours); FT-110, FT-250, FT-251, FT-400S, FT-150, and FT-400SW (all

manufactured by Neos Co., Ltd.); Polyfox PF-136A, PF-156A, PF-151N, PF-154, and PF-159 (manufactured by Omnova Solutions Inc.); and Unidyne DSN-403N (manufactured by Daikin Industries, Ltd.). Among the commercially available products, from the viewpoint of good text printing quality, especially in terms of significantly improving the coloration, the permeability with respect to paper, wettability, and uniformity, FS-3100, FS-34 and FS-300 manufactured by Chemours, FT-110, FT-250, FT-251, FT-400S, FT-150 and FT-400SW manufactured by Neos Co., Ltd., PF-151N manufactured by Omnova Solutions Inc., and Unidyne DSN-403N manufactured by Daikin Industries Ltd. are particularly preferable.

-- Amphoteric Surfactant --

Examples of amphoteric surfactants that can be included in the first treatment liquid include, but are not limited to, lauryl aminopropionate, lauryl dimethyl betaine, stearyl dimethyl betaine, and lauryl dihydroxyethyl betaine.

-- Nonionic Surfactant --

Examples of nonionic surfactants that can be included in the first treatment liquid include, but are not limited to, polyoxyethylene alkylphenyl ethers, polyoxyethylene alkyl esters, polyoxyethylene alkylamines, polyoxyethylene alkylamides, polyoxyethylene-propylene block polymers, sorbitan fatty acid esters, polyoxyethylene sorbitan fatty acid esters, and ethylene oxide adducts of acetylene alcohol.

-- Anionic Surfactant --

Examples of anionic surfactants that can be included in the first treatment liquid include, but are not limited to, polyoxyethylene alkyl ether acetate, dodecylbenzene sulfonate, laurate salts, and polyoxyethylene alkyl ether sulfate salts.

The amphoteric surfactants, nonionic surfactants, and anionic surfactants may be synthesized as appropriate, or commercially available products may be used. For example, commercially available products are available from BIC Chemie Co., Ltd., Shin-Etsu Chemical Co., Ltd., Toray Dow Corning Silicone Co., Ltd., Nippon Emulsion Co., Ltd., and Kyoeisha Chemical Co., Ltd.

- Lubricant -

The first treatment liquid preferably contains a lubricant.

The lubricant represents a component that, by being included as a component constituting the printed matter, has the function of improving the robustness of the printed matter and the concealability of the fabric base. As a result of including the lubricant in the first treatment liquid, the robustness and the concealability of the fabric base of a printed matter formed by applying the first treatment liquid and the like can be improved.

The lubricant is preferably included in the first treatment liquid in the form of lubricant particles, or in other words, in a dispersed state.

As a result of being able to stably maintain the form of the lubricant particles in the first treatment liquid, changes in viscosity in the first treatment liquid are reduced and the storage stability is improved, and an inkjet method, whose ejection performance is strongly affected by the viscosity, can be preferably applied.

The lubricant constituting the lubricant particles may be a liquid or a solid.

The volume average particle diameter of the lubricant is not particularly limited and can be appropriately selected according to the intended purpose. However, the volume average particle diameter is preferably 0.01 $\mu$m or more, and more preferably 0.01 $\mu$m or more and 0.2 $\mu$m or less. When the volume average particle diameter of the lubricant is 0.01 $\mu$m or more, the flexibility of the printed matter can be further improved. The volume average particle diameter can be measured, for example, using a particle size analyzer (device name: NANOTRAC Wave-UT151, manufactured by MicrotracBEL Corp.).

The content of the lubricant that can be included in the first treatment liquid is preferably 0.1% by mass or more and 10% by mass or less with respect to the mass of the first treatment liquid, and is more preferably 0.1% by mass or more and 6.0% by mass or less. Within the above range, the robustness of the printed matter and the concealability of the fabric base can be improved.

The lubricant that can be included in the first treatment liquid is an anionic compound or a nonionic compound from the viewpoint of preventing the mist generated when applying the first treatment liquid to the fabric from contaminating the inside of the device.

Examples of lubricants include, but are not limited to, siloxane compounds and waxes. Among these, siloxane compounds are preferable from the viewpoint of being able to further improve the robustness of the printed matter and

the concealability of the fabric base.

-- Siloxane Compound --

The siloxane compound is not particularly limited and can be appropriately selected according to the intended purpose. Examples of siloxane compounds include, but are not limited to, organopolysiloxanes such as dimethylpolysiloxane, and modified organopolysiloxanes such as polyether-modified organopolysiloxanes, amino-modified organopolysiloxanes, hydroxy-modified organopolysiloxanes, epoxy-modified organopolysiloxanes, and phenyl-modified organopolysiloxanes.

Among these, it is preferable to use dimethylpolysiloxane or amino-modified organopolysiloxanes from the viewpoint of further improving the dry rub robustness and the flexibility of the printed matter. Each of these can be used alone or in combination with others.

Commercially available siloxane compounds include, but are not limited to, dimethylpolysiloxane (product name: KM-860A, manufactured by Shin-Etsu Chemical Co., Ltd.), dimethylpolysiloxane (product name: KM-9737A, manufactured by Shin-Etsu Chemical Co., Ltd.), dimethylpolysiloxane (product name: KM-9782, manufactured by Shin-Etsu Chemical Co., Ltd.), dimethylpolysiloxane (product name: KM-862T, manufactured by Shin-Etsu Chemical Co., Ltd.), dimethylpolysiloxane (product name: KM-9738A, manufactured by Shin-Etsu Chemical Co., Ltd.), amino-modified organopolysiloxane (product name: POLON-MF-14, manufactured by Shin-Etsu Chemical Co., Ltd.), amino-modified organopolysiloxane (product name: POLON-MF-51, manufactured by Shin-Etsu Chemical Co., Ltd.), epoxy-modified organopolysiloxane (product name: X-51-1264, manufactured by Shin-Etsu Chemical Co., Ltd.), phenyl-modified organopolysiloxane (product name: KM-9739, manufactured by Shin-Etsu Chemical Co., Ltd.), polyether-modified organopolysiloxane (product name: BYK-307, manufactured by BYK Chemie Japan Co., Ltd.), dimethylpolysiloxane (product name: BYK-333, manufactured by BYK Chemie Japan Co., Ltd.), and dimethylpolysiloxane (product name: BYK-378, BYK Chemie Japan Co., Ltd.).

-- Wax --

The wax is not particularly limited and can be appropriately selected according to the intended purpose. However, from the viewpoint of further improving the robustness and flexibility of the printed matter, for example, polyethylene wax and carnauba wax are preferable. Each of these can be used alone or in combination with others.

As the polyethylene wax, a commercially available product can be used. Examples of commercially available products include, but are not limited to, the Nopcoat series manufactured by San Nopco Ltd., the Nopcomal series manufactured by San Nopco Ltd., the Hitech series manufactured by Toho Chemical Industry Co., Ltd., and the AQUACER series (such as AQUACER-515) manufactured by BYK Chemie Japan Co., Ltd.

As the carnauba wax, commercially available products can be used. Examples of commercially available products include, but are not limited to, Cellosol 524 and Torasol CN manufactured by Chukyo Yushi Co., Ltd.

The melting point of the wax that can be included in the first treatment liquid is preferably 50°C or more and 130°C or less, and more preferably 60°C or more and 120°C or less. When the melting point is within the above range, the robustness and flexibility of the printed matter can be further improved.

- Thickener -

The first treatment liquid preferably contains a thickener.

As a result of including a thickener as a component constituting the printed matter, the viscosity of the first treatment liquid can be improved.

As the thickener included in the first treatment liquid, it is preferable to use a urethane-modified polyether polymer.

-- Urethane-Modified Polyether Polymer --

The urethane-modified polyether polymer is a thickener that has a hydrophobic part and a hydrophilic part, and the molecules associate with each other through hydrophobic interactions in an aqueous medium to increase the viscosity of the system.

The urethane-modified polyether polymers that can be included in the first treatment liquid can be used alone or in a combination of two or more in an arbitrary ratio. Examples of urethane-modified polyether polymers include, but are not limited to, compounds represented by the following general formula (1).

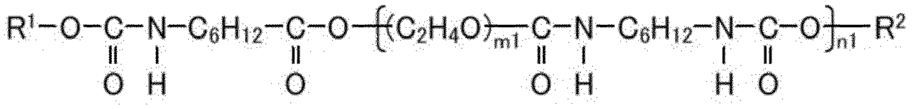 (1)

In general formula (1), $R^1$ and $R^2$ each represent an aliphatic hydrocarbon group or an aromatic hydrocarbon group, and m1 and n1 each represent an integer of 1 or more.

Such urethane-modified polyether polymers can be produced according to a known method, and are also available as commercial products. Examples of commercially available products include, but are not limited to, SN Thickener 603, 607, 612, 612NC, 625N, A803, A804, A812, and A814 (manufactured by San Nopco Ltd.), and Adekanol UH series (manufactured by Asahi Denka Kogyo Corp.).

The amount of the urethane-modified polyether polymer that can be included in the first treatment liquid is, in terms of solid content, for example, 0.01% by mass or more and 2.00% by mass or less, and 0.05% by mass or more and 1.00% by mass or less. When the content is 0.01% by mass or more and 2.00% by mass or less, the viscosity of the treatment liquid increases, the effect of preventing permeation into the fabric is obtained, the permeation of the second treatment liquid and the ink is prevented, and an improvement in the concealability of the fabric base can be expected.

- Other Components -

If preferable, as other components that can be included in the first treatment liquid in addition to those described above, various known additives can be used, and examples include, but are not limited to, antifoaming agents, pH adjusters, mold inhibitors, and rust inhibitors.

«Physical Properties of First Treatment Liquid»

The physical properties of the first treatment liquid are not particularly limited and can be appropriately selected according to the intended purpose. For example, the viscosity, surface tension, pH, and the like, are preferably within the following ranges.

The viscosity of the first treatment liquid at 25°C is more preferably 5 mPa·s or less. Here, the viscosity can be measured using, for example, a rotational viscometer (RE-80L manufactured by Toki Sangyo Co., Ltd.). The measurement can be performed at 25°C with a standard cone rotor (1°34' × R24), a sample liquid volume of 1.2 mL, and a rotation speed of 100 rpm for 3 minutes.

The surface tension of the first treatment liquid at 25°C is preferably 35 mN/m or less, and more preferably 32 mN/m or less from the viewpoint of suitable leveling on the fabric and a shorter drying time.

The pH of the first treatment liquid is preferably 7 to 12, and more preferably 8 to 11 from the viewpoint of preventing corrosion of the metallic members that come into contact with the liquid.

<Second Step>

The second step is a step for applying, after the first step, a second treatment liquid containing water, a water-soluble solvent, and a flocculant to an area in which the first treatment liquid has been applied.

The method of applying the second treatment liquid is not particularly limited, and examples include, but are not limited to, an inkjet method, a blade coating method, a gravure coating method, a bar coating method, a roll coating method, a dip coating method, a curtain coating method, a slide coating method, a die coating method, and a spray coating method. Among these methods, an inkjet method is preferable.

The attached amount of the second treatment liquid is preferably 5 mg/cm$^2$ or more and 15 mg/cm$^2$ or less, and more preferably 6 mg/cm$^2$ or more and 14 mg/cm$^2$ or less. When the attached amount of the treatment liquid is 5 mg/cm$^2$ or more, the image density improves due to a suitable level of ink aggregation. When the application amount of the treatment liquid is 15 mg/cm$^2$ or less, it is possible to prevent a decrease in the image density caused by poor spreading on the fabric surface due to excessive ink aggregation, a decrease in robustness, and stickiness of the printed matter caused by an increase in the amount of solvent in the treatment liquid.

<<Second Treatment Liquid>>

The second treatment liquid contains water, a water-soluble solvent, and a flocculant.

By including water and a water-soluble solvent in the second treatment liquid, it becomes easier to adjust the viscosity to a level that enables easier application to the fabric.

Furthermore, by including a flocculant in the second treatment liquid, the ink aggregates, which prevents a decrease in the image density of printed matter and image bleeding, and the concealability of the fabric base improves.
Moreover, if preferable, the second treatment liquid may contain a surfactant and other components.

- Water -

As the water included in the second treatment liquid, for example, distilled water, ion-exchanged water, ultrafiltrated water, reverse osmosis water, pure water, and ultrapure water can be used.
The water content included in the second treatment liquid is not particularly limited and can be appropriately selected according to the intended purpose. However, from the viewpoint of the drying properties of the second treatment liquid, the water content is preferably 10.0% by mass or more and 90.0% by mass or less, more preferably 30.0% by mass or more and 90.0% by mass or less, and even more preferably 50.0% by mass or more and 90.0% by mass or less, with respect to the mass of the second treatment liquid.

- Water-Soluble Solvent -

The water-soluble solvent contained in the second treatment liquid preferably has a boiling point of less than 240°C. When the boiling point of the water-soluble solvent is less than 240°C, appropriate drying properties are maintained, and as a result, stickiness of the printed matter is reduced. Examples of such water-soluble solvents include, but are not limited to, polyhydric alcohols, ethers such as polyhydric alcohol alkyl ethers and polyhydric alcohol aryl ethers, nitrogen-containing heterocyclic compounds, amides, amines, sulfur-containing compounds, monoalcohols, and oxygen-containing compounds.

-- Polyhydric Alcohol --

Examples of polyhydric alcohols include, but are not limited to, ethylene glycol, diethylene glycol, 1,2-propanediol, 1,3-propanediol, 1,2-butanediol, 1,3-butanediol, 1,4-butanediol, 2,3-butanediol, 3-methyl-1,3-butanediol, triethylene glycol, polyethylene glycol, polypropylene glycol, 1,2-pentanediol, 1,3-pentanediol, 1,4-pentanediol, 2,4-pentanediol, 1,5-pentanediol, 1,2-hexanediol, 1,6-hexanediol, 1,3-hexanediol, 2,5-hexanediol, 1,5-hexanediol, glycerin, 1,2,6-hexanetriol, 2-ethyl-1,3-hexanediol, ethyl-1,2,4-butanetriol, 1,2,3-butanetriol, 2,2,4-trimethyl-1,3-pentanediol, and petriol.

-- Polyhydric Alcohol Alkyl Ethers --

Examples of polyhydric alcohol alkyl ethers include, but are not limited to, polyhydric alcohol alkyl ethers such as ethylene glycol monoethyl ether, ethylene glycol monobutyl ether, diethylene glycol monomethyl ether, diethylene glycol monoethyl ether, diethylene glycol monobutyl ether, tetraethylene glycol monomethyl ether, and propylene glycol monoethyl ether.

-- Polyhydric Alcohol Aryl Ethers --

Examples of polyhydric alcohol aryl ethers include, but are not limited to, ethylene glycol monophenyl ether and ethylene glycol monobenzyl ether.

-- Nitrogen-Containing Heterocyclic Compounds --

Examples of nitrogen-containing heterocyclic compounds include, but are not limited to, 2-pyrrolidone, N-methyl-2-pyrrolidone, N-hydroxyethyl-2-pyrrolidone, 1,3-dimethyl-2-imidazolidinone, ε-caprolactam, and γ-butyrolactone.

-- Amides --

Examples of amides include, but are not limited to, formamide, N-methylformamide, N,N-dimethylformamide, 3-methoxy-N,N-dimethylpropionamide, and 3-butoxy-N,N-dimethylpropionamide.

-- Amines --

Examples of amines include, but are not limited to, monoethanolamine, diethanolamine, and triethylamine.

-- Sulfur-Containing Compounds --

Examples of sulfur-containing compounds include, but are not limited to, dimethyl sulfoxide, sulfolane, and thiodiethanol.

-- Monoalcohols --

Examples of monoalcohols include, but are not limited to, 3-methoxy-3-methyl-1-butanol.

-- Oxygen-Containing Compound --

Examples of oxygen-containing compounds include, but are not limited to, 3-ethyl-3-methylhydroxyoxetane.

-- Polyol Compounds --

As the water-soluble solvent, polyol compounds having 8 or more carbon atoms and glycol ether compounds are also preferably used.

Examples of polyol compounds having 8 or more carbon atoms include, but are not limited to, 2-ethyl-1,3-hexanediol and 2,2,4-trimethyl-1,3-pentanediol.

-- Glycol Ether Compounds --

Examples of glycol ether compounds include, but are not limited to, polyhydric alcohol alkyl ethers such as ethylene glycol monoethyl ether, ethylene glycol monobutyl ether, diethylene glycol monomethyl ether, diethylene glycol monoethyl ether, diethylene glycol monobutyl ether, tetraethylene glycol monomethyl ether, and propylene glycol monoethyl ether; and polyhydric alcohol aryl ethers such as ethylene glycol monophenyl ether and ethylene glycol monobenzyl ether.

Among the water-soluble solvents mentioned above, it is preferable to use a water-soluble solvent having a maximum boiling point of less than 240°C because, in addition to functioning as a wetting agent, good drying properties can be obtained. Among such water-soluble solvents, 3-methoxy-3-methyl-1-butanol, 1,2-propanediol, 1,3-butanediol, and 3-ethyl-3-methylhydroxyoxetane are particularly preferable.

The content of the water-soluble solvent is preferably 45% by mass or less, and more preferably 35% by mass or less, with respect to the total amount of the second treatment liquid from the viewpoint of reducing stickiness of the printed matter.

- Flocculant -

From the viewpoint of improving the image density of the printed matter and preventing bleeding, the content of the flocculant included in the second treatment liquid is preferably 7.5% by mass or more and 27.5% by mass or less, and more preferably 10% by mass or more and 25% by mass or less, with respect to the total amount of the second treatment liquid.

As the flocculant included in the second treatment liquid, for example, inorganic salts, organic salts, and cationic polymers, can be used. Among these, inorganic salts and organic salts are preferable from the viewpoint of material safety. Divalent inorganic salts are preferable from the viewpoint of concealability of the fabric base of the obtained printed matter. Each of these can be used alone or in combination with others.

-- Inorganic Salt --

Examples of inorganic salts include, but are not limited to, monovalent inorganic salts such as sodium chloride, potassium chloride, and potassium nitrate, and divalent or higher inorganic salts such as calcium carbonate, calcium nitrate, calcium chloride, calcium acetate, calcium sulfate, magnesium chloride, magnesium acetate, magnesium sulfate, nickel chloride, barium sulfate, zinc sulfide, zinc carbonate, aluminum silicate, calcium silicate, magnesium silicate, aluminum hydroxide, aluminum sulfate, aluminum phosphate, aluminum lactate, polyaluminum chloride, iron (III) sulfate, potassium aluminum sulfate, potassium iron alum, and ammonium iron alum. Further, hydrates of the inorganic salts above may be used as flocculants, and calcium nitrate tetrahydrate is preferred among the hydrates of the inorganic salts.

-- Organic Salt --

Examples of organic salts include, but are not limited to, ammonium acetate, ammonium formate, ammonium oxalate, and ammonium lactate.

-- Cationic Polymers --

The cationic polymer is, for example, preferably a quaternary ammonium salt-type cationic polymer compound, and specific examples include, but are not limited to, dialkylallylammonium chloride polymers, dialkylaminoethyl (meth)acrylate quaternary ammonium salt polymers, modified polyvinyl alcohol dialkyl ammonium salt polymers, and dialkyl diallylammonium salt polymers.

In addition, examples of other cationic polymers include, but are not limited to, cationic specially-modified polyamine compounds, cationic polyamide polyamine compounds, cationic urea-formalin resin compounds, cationic polyacrylamide compounds, cationic alkyl ketene dimers, cationic dicyandiamide compounds, cationic dicyandiamide-formalin condensation compounds, cationic dicyandiamide-polyamine condensation compounds, cationic polyvinylformamide compounds, cationic polyvinylpyridine compounds, cationic polyalkylene polyamine compounds, and cationic epoxy polyamide compounds.

Furthermore, if preferable, the second treatment liquid may contain a surfactant and other components, and the content of the surfactants and other components that can be used are the same as those described above for the first treatment liquid.

«Physical Properties of Second Treatment Liquid»

The physical properties of the second treatment liquid are not particularly limited and can be appropriately selected according to the intended purpose. For example, the viscosity, surface tension, pH, and the like are preferably within the following ranges.

The viscosity of the second treatment liquid at 25°C is preferably 5 mPa s or more to 30mPa·s or less, and more preferably 5 mPa s or more to 25 mPa s or less.

The surface tension of the second treatment liquid at 25°C is preferably 35 mN/m or less, and more preferably 32 mN/m or less from the viewpoint of suitable leveling on the fabric and a shorter drying time.

The pH of the second treatment liquid is preferably 4 to 8, and more preferably 5 to 8 from the viewpoint of preventing corrosion of the metallic members that come into contact with the liquid.

<Third Step>

The third step is a step performed after the second step, and is a step for applying an ink to an area in which the second treatment liquid has been applied.

The method of applying the ink is not particularly limited, and examples include, but are not limited to, an inkjet method, a blade coating method, a gravure coating method, a bar coating method, a roll coating method, a dip coating method, a curtain coating method, a slide coating method, a die coating method, and a spray coating method. Among these methods, an inkjet method is preferable.

The application amount of the ink per unit area of the fabric is not particularly limited and can be appropriately selected according to the intended purpose. However, from the viewpoint of the concealing properties of the fabric base, the application amount is preferably 10 mg/cm$^2$ or more and 30 mg/cm$^2$ or less, and is more preferably 15 mg/cm$^2$ or more and 25 mg/cm$^2$ or less.

An application amount of the ink with respect to the fabric of 10 mg/cm$^2$ or more is preferable from the viewpoint of the concealability of the fabric base, and an application amount of 30 mg/cm$^2$ or less is preferable from the viewpoint of obtaining a soft texture.

<<Ink>>

The ink may include water, a colorant, a water-soluble solvent, a resin, a surfactant, and other components.

Furthermore, when the second treatment liquid contains a cationic flocculant, it is preferable that at least one component selected from the colorant and the resin that may be included in the ink is anionic.

When the second treatment liquid contains a cationic flocculant, as a result of at least one component selected from the colorant and resin that may be included in the ink being anionic, the ink aggregates or thickens when the ink comes into contact with a component (flocculant) included in the second treatment liquid. As a result, the colorant and the like can stay at the fabric surface, which can improve the image density.

- Water -

As the water that can be included in the ink, for example, distilled water, ion-exchanged water, ultrafiltrated water, reverse osmosis water, pure water, and ultrapure water can be used.

The water content that can be included in the ink is not particularly limited and can be appropriately selected according to the intended purpose. However, from the viewpoint of the drying properties of the second treatment liquid, the water content is preferably 10.0% by mass or more and 90.0% by mass or less, more preferably 30.0% by mass or more and 90.0% by mass or less, and even more preferably 50.0% by mass or more and 90.0% by mass or less, with respect to the mass of the second treatment liquid.

- Colorant -

The content of the colorant that may be included in the ink can be appropriately determined according to the application of the ink and the like. However, it is preferable that the content is 0.1% by mass or more and 15.0% by mass or less, and is more preferably 1.0% by mass and 10.0% by mass or less, with respect to the mass of the ink.

The color of the ink is not particularly limited and can be appropriately selected according to the intended purpose. For example, the color can be selected from glossy colors or metallic colors such as black, yellow, magenta, cyan, white, green, orange, gold, and silver.

The color of the ink is preferably white from the viewpoint of the concealability of the fabric base, and is particularly preferably white when a dark-colored polyester fabric is used.

The colorant that may be included in the ink is not particularly limited, and although pigments and dyes can be used, pigments are preferable. Furthermore, as mentioned above, when the second treatment liquid contains a cationic flocculant, the colorant is preferably anionic from the viewpoint of interacting with the flocculant, and is more preferably an anionic pigment.

Examples of pigments that can be used include, but are not limited to, black pigments, yellow pigments, magenta pigments, cyan pigments, white pigments, green pigments, orange pigments, and gold and silver-colored glossy pigments and metallic pigments. Further, inorganic pigments and organic pigments can be used.

-- Inorganic Pigment --

As the inorganic pigment, in addition to titanium oxide, iron oxide, calcium carbonate, barium sulfate, aluminum hydroxide, barium yellow, cadmium red, and chrome yellow, it is possible to use carbon black manufactured by a known method such as a contact method, a furnace method, and a thermal method.

-- Organic Pigment --

Examples of organic pigments that can be used include, but are not limited to, azo pigments, polycyclic pigments (for example, phthalocyanine pigments, perylene pigments, perinone pigments, anthraquinone pigments, quinacridone pigments, dioxazine pigments, indigo pigments, thioindigo pigments, isoindolinone pigments, and quinophthalone pigments), dye chelates (for example, basic dye-type chelates and acidic dye-type chelates), nitro pigments, nitroso pigments, and aniline black. Among these pigments, those with good affinity for the solvent are preferable. In addition, resin hollow particles and inorganic hollow particles can also be used.

Examples of white pigments include, but are not limited to, titanium oxide, calcium carbonate, barium sulfate, and aluminum hydroxide.

Specific examples of the pigments for black include, but are not limited to, carbon black (C.I. Pigment Black 7) such as furnace black, lamp black, acetylene black, and channel black, or metals such as copper, iron (C.I. Pigment Black 11), and titanium oxide, and organic pigments such as aniline black (C.I. Pigment Black 1).

Specific examples of the pigment for colors other than black include, but are not limited to, C.I. Pigment Yellow 1, 3, 12, 13, 14, 17, 24, 34, 35, 37, 42 (yellow iron oxide), 53, 55, 74, 81, 83, 95, 97, 98, 100, 101, 104, 108, 109, 110, 117, 120, 138, 150, 153, 155, 180, 185, and 213, C.I. Pigment Orange 5, 13, 16, 17, 36, 43, and 51, C.I. Pigment Red 1, 2, 3, 5, 17, 22, 23, 31, 38, 48:2, 48:2 (Permanent Red 2B (Ca)), 48:3, 48:4, 49:1, 52:2, 53:1, 57:1 (Brilliant Carmine 6B), 60:1, 63:1, 63:2, 64:1, 81, 83, 88, 101 (Bengara), 104, 105, 106, 108 (Cadmium Red), 112, 114, 122 (Quinacridone Magenta), 123, 146, 149, 166, 168, 170, 172, 177, 178, 179, 184, 185, 190, 193, 202, 207, 208, 209, 213, 219, 224, 254, and 264, C.I. Pigment Violet 1 (Rhodamine Lake), 3, 5:1, 16, 19, 23, and 38, C.I. Pigment Blue 1, 2, 15 (Phthalocyanine Blue), 15:1, 15:2, 15:3, 15:4 (Phthalocyanine Blue), 16, 17:1, 56, 60, and 63, and C.I. Pigment Green 1, 4, 7, 8, 10, 17, 18, and 36.

The dye is not particularly limited, and acid dyes, direct dyes, reactive dyes, and basic dyes can be used. These can be used alone or in combination with others.

Examples of dyes include, but are not limited to, C.I. Acid Yellow 17, 23, 42, 44, 79, and 142, C.I. Acid Red 52, 80, 82, 249, 254, and 289, C.I. Acid Blue 9, 45, and 249, C.I. Acid Black 1, 2, 24, and 94, C.I. Food Black 1 and 2, C.I. Direct Yellow 1, 12, 24, 33, 50, 55, 58, 86, 132, 142, 144, and 173, C.I. Direct Red 1, 4, 9, 80, 81, 225, and 227, C.I. Direct Blue 1, 2, 15, 71, 86, 87, 98, 165, 199, and 202, C.I. Direct Black 19, 38, 51, 71, 154, 168, 171, and 195, C.I. Reactive Red 14, 32, 55, 79, and 249, and Reactive Black 3, 4, and 35.

Examples of the method used to obtain the ink by dispersing the pigment include, but are not limited to, a method of forming a self-dispersing pigment by introducing a hydrophilic functional group to the pigment, a method of coating the surface of the pigment with a resin to disperse the pigment, and a method of dispersing the pigment using a dispersant.

Examples of methods of forming a self-dispersing pigment by introducing a hydrophilic functional group to the pigment include, but are not limited to, a method of making the pigment dispersible in water by adding a functional group such as a sulfone group or a carboxyl group to the pigment (such as carbon).

Examples of methods of coating the surface of the pigment with resin to disperse the pigment include, but are not limited to, a method of making the pigment dispersible in water by enclosing the pigment in a microcapsule. Such a pigment can also be referred to as a resin-coated pigment. In this case, all of the pigment that is used does not need to be coated by the resin, and uncoated pigment and partially coated pigment may also be included.

Examples of the method for dispersing the pigment using a dispersant include, but are not limited to, methods that disperse using a known low-molecular weight dispersant or polymer-type dispersant, which are typified by surfactants. As the dispersant, depending on the pigment, it is possible to use, for example, an anionic surfactant, a cationic surfactant, an amphoteric surfactant, or a nonionic surfactant. RT-100 (nonionic surfactant) manufactured by Takemoto Yushi Co., Ltd. and a formalin condensate of sodium naphthalene sulfonate can also be preferably used as the dispersant. The dispersant may be used alone or in combination with others.

- Resin -

The content of the resin that can be included in the ink is not particularly limited and can be appropriately selected according to the intended purpose. However, from the viewpoint of the fixing properties and the storage stability of the ink, the content is preferably 1.0% by mass or more and 30.0% by mass or less, and is more preferably 5.0% by mass and 20.0% by mass or less, with respect to the mass of the ink.

The resin that can be included in the ink is not particularly limited and can be appropriately selected according to the intended purpose. Examples of the resin include, but are not limited to, urethane resins, polyester resins, acrylic resins, vinyl acetate resins, styrene resins, butadiene resins, styrene-butadiene resins, vinyl chloride resins, acrylic styrene resins, and acrylic silicone resins. Among these, from the viewpoint of image robustness and flexibility, the resin is preferably a urethane resin. Furthermore, as mentioned above, when the second treatment liquid contains a cationic flocculant, the resin that can be included in the ink is preferably anionic from the viewpoint of interacting with the flocculant.

Although the form of the resin that can be included in the ink is not particularly limited, the resin is preferably dispersed in the form of resin particles. It is possible to obtain the ink by mixing resin particles with materials such as a colorant and an organic solvents in the state of a resin emulsion in which resin particles are dispersed using water as a dispersion medium. The resin particles may be synthesized as appropriate, or commercially available products may be used.

The volume average particle diameter of the resin particles that can be included in the ink is not particularly limited and can be appropriately selected according to the intended purpose. However, from the viewpoint of obtaining good fixing properties and high image hardness, the volume average particle diameter is preferably 10 nm or more and 1,000 nm or less, more preferably 10 nm or more and 200 nm or less, and even more preferably 10 nm or more and 100 nm or less.

The volume average particle diameter of the resin particles can be measured, for example, using a particle size analyzer (NANOTRAC Wave-UT151, manufactured by MicrotracBEL Corp.).

- Water-Soluble Solvent -

The amount and type of the water-soluble solvent that can be included in the ink are the same as that of the water-soluble solvent that can be included in the second treatment liquid.

- Surfactant -

The amount and type of the surfactant that can be included in the ink are the same as that of the surfactant that can be included in the first treatment liquid.

- Other Components -

The amount and type of the other components that can be included in the ink are the same as that of the other components that can be included in the first treatment liquid.

«Physical Properties of Ink»

The physical properties of the ink are not particularly limited and can be appropriately selected according to the intended purpose. For example, the viscosity, surface tension, pH, and the like are preferably within the following ranges.

The viscosity of the ink at 25°C is preferably 5 mPa s or more to 30mPa·s or less, and more preferably 5 mPa·s or more to 25 mPa s or less.

The surface tension of the ink at 25°C is preferably 35 mN/m or less, and more preferably 32 mN/m or less from the viewpoint of suitable leveling on the fabric and a shorter drying time.

The pH of the ink is preferably 7 to 12, and more preferably 8 to 11 from the viewpoint of preventing corrosion of the metallic members that come into contact with the liquid.

(Printing Method)

The printing method according to an embodiment of the present invention includes: an image forming step for forming an image on the fabric by the image recording method according to an embodiment of the present invention; and a drying step for drying the formed image by heating, wherein a heating temperature in the drying step is 100°C or more and 140°C or less.

Even when the printing method according to an embodiment of the present invention is applied to a printing process in which an image is formed on a dark-colored polyester fabric that has been colored using a dispersed dye then heat is applied in the drying step , the dye does not bleed out from the inside of the polyester fibers and does not cause a decrease in the concealability of the fabric base, which enables the fixing properties to be ensured. Therefore, it becomes easier to adjust the heating temperature to a higher temperature.

By including the drying step, the fixing properties of the image on the fabric can be improved. Therefore, it is preferable that the printing method include the drying step after the image forming step of the image recording method.

The drying method of the drying step is not particularly limited and can be appropriately selected from known drying methods. Examples of the drying method include, but are not limited to, methods that perform the drying using a roll heater, a drum heater, an infrared heater, a hot air generation device, or a heat press device.

Heating may be performed in the drying step, and the heating temperature is not particularly limited and can be appropriately selected according to the intended purpose. However, the temperature is preferably 100°C or higher and 140°C or lower.

When the heating temperature is 100°C or higher, it is easier to reduce the stickiness of the printed matter and ensure the fixing properties. Further, when the heating temperature is 140°C or lower, when a "dark-colored fabric" is used, it is easier to prevent bleeding of the dispersed dye and ensure the concealability of the fabric base.

Furthermore, the heating time is not particularly limited and can be appropriately selected according to the intended purpose. However, the heating time is preferably 1 minute or more, and is more preferably 1 minute or more and 5 minutes or less.

The pressure conditions of the drying step are not particularly limited. However, from the viewpoint of the fixing efficiency of the ink to the fabric and the productivity, it is preferable that drying is performed by applying pressure to the fabric area in which the ink has been applied, more preferable that drying is performed by pressing at 300 to 500 gf/$cm^2$, and even more preferable that drying is performed by pressing while heating using a heat-pressing device such as a heat press device.

(Image Recording Device)

An image recording device according to an embodiment of the present invention includes: a first treatment liquid applying unit that applies a first treatment liquid to a fabric; a second treatment liquid applying unit that applies a second treatment liquid to an area in which the first treatment liquid has been applied; and an ink applying unit that applies an ink to an area in which the second treatment liquid has been applied. The image recording device preferably also includes a first treatment liquid accommodating unit that accommodates the first treatment liquid, a second treatment liquid accommodating unit that accommodates the second treatment liquid, and an ink accommodating unit that accommodates the ink, and if preferable, can further include other units.

In the present disclosure, the image recording device and the image recording method respectively represent

a device that is capable of applying the first treatment liquid, the second treatment liquid, the ink, and if preferable, various other treatment liquids and the like to a recording medium, and a method that performs recording using the device.

The recording medium represents a medium in which the first treatment liquid, the second treatment liquid, the ink, and if preferable, various other treatment liquids can be at least temporarily attached, and a fabric is preferable.

Furthermore, the image recording device and the image recording method are not limited to visualizing an image of significance such as a character or a figure using ink. For example, those that form a pattern such as a geometric pattern or form a three-dimensional image are also included.

The image recording method according to an embodiment of the present invention is preferably performed by the image recording device according to an embodiment of the present invention.

Hereinafter, a description of the image recording device according to an embodiment of the present invention will be provided together with a description of the image recording method according to an embodiment of the present invention.

<First Treatment Liquid Accommodating Unit>

The first treatment liquid accommodating unit is a unit that accommodates the first treatment liquid.

The first treatment liquid accommodating unit may be an ink cartridge according to an embodiment of the present invention described below.

Because the first treatment liquid is as described above, the description will be omitted.

<First Treatment Liquid Application Step (First Step) and First Treatment Liquid Applying Unit>

The first treatment liquid application step is a step for applying a first treatment liquid containing water and substantially free of organic solvent to a fabric.

The first treatment liquid applying unit is a unit that applies a first treatment liquid containing water and substantially free of organic solvent to a fabric.

The first treatment liquid application step is preferably performed by the first treatment liquid applying unit.

The application method of the first treatment liquid is not particularly limited and can be appropriately selected according to the intended purpose. Examples thereof include, but are not limited to, an inkjet method, a spray coating method, a blade coating method, a gravure coating method, a bar coating method, a roll coating method, a dip coating method, a curtain coating method, a slide coating method, and a die coating method.

Among these methods, the application method of the first treatment liquid is preferably an inkjet method.

The application amount of the first treatment liquid per unit area of the fabric is not particularly limited and can be appropriately selected according to the intended purpose. However, from the viewpoint of obtaining a high concealability of the fabric base, the application amount is preferably 5 mg/cm$^2$ or more and 12 mg/cm$^2$ or less.

When the application amount of the first treatment liquid on the fabric is 5 mg/cm$^2$ or more, it is preferable from the viewpoint of the second treatment liquid and the ink staying on the fiber surface. Further, when the application amount is 12 mg/cm$^2$ or less, it is preferable from the viewpoint of the drying properties.

<Second Treatment Liquid Accommodating Unit>

The second treatment liquid accommodating unit is a unit that accommodates the second treatment liquid.

The second treatment liquid accommodating unit may be an ink cartridge according to an embodiment of the present invention described below.

Because the second treatment liquid is as described above, the description will be omitted.

<Second Treatment Liquid Application Step (First Step) and Second Treatment Liquid Applying Unit>

The second treatment liquid application step (second step) is a step for applying a second treatment liquid containing water, a water-soluble solvent, and a flocculant to an area in which the first treatment liquid has been applied.

The second treatment liquid applying unit is a unit that applies a second treatment liquid containing water, a water-soluble solvent, and a flocculant to an area in which the first treatment liquid has been applied.

The second treatment liquid application step is preferably performed by the second treatment liquid applying unit.

In the image recording method, it is preferable that the first treatment liquid application step and the second treatment liquid application step are performed separately. When the first treatment liquid application step and the second treatment liquid application step are performed simultaneously, or when the first treatment liquid and the second treatment liquid are mixed, the mixed treatment liquid aggregates before being applied to the fabric. Therefore, by separately performing the first treatment liquid application step and the second treatment liquid application step, an effect of improving

the concealability of the fabric base is more significantly obtained.

Furthermore, the second treatment liquid application step is performed by applying the second treatment liquid to the area in which the first treatment liquid has been applied while the first treatment liquid that has been applied to the fabric is still in a wet state (this situation is sometimes referred to as "wet-on-wet").

Herein, "while the first treatment liquid is still in a wet state" refers to the condition (1) below, and may also refer to at least one of the conditions (2) and (3) below.

(1) A forced drying step is not provided between the first treatment liquid application step and the second treatment liquid application step.
(2) After applying the first treatment liquid to the fabric, the second treatment liquid is applied in a state where the surface temperature of the fabric is 32°C or lower.
(3) The second treatment liquid is further applied in a state where 70% by mass or more of the solvent included in the first treatment liquid remains in the fabric.

On the other hand, "while the first treatment liquid is still in a wet state" does not include, as mentioned above, a case of simultaneously applying the first treatment liquid and the second treatment liquid to the fabric (that is, simultaneously performing the first treatment liquid application step and the second treatment liquid application step), and a case of mixing the first treatment liquid and the second treatment liquid and then applying the mixture to the fabric.

Even when the second treatment liquid is applied while the first treatment liquid that has been applied to the fabric is still in a wet state, the film formed as a result of thickening of the first treatment liquid can be preferably maintained without mixing with the second treatment liquid.

Also, herein, a "forced drying step" does not include natural drying under the conditions of 5°C to 35°C and 5% to 90% relative humidity, and refers to artificially blowing air or artificially heating. In addition, it can be stated that even when the temperature and humidity are outside the conditions above, the first treatment liquid is "in a wet state" as long as the conditions (1) and (2) above are satisfied.

In the case of artificially heating, the heating temperature is a temperature outside that of the natural drying conditions, and for example, is above 35°C. Furthermore, in the case of artificially heating, the heating time is not particularly limited, and for example, is 1 minute or more. The "forced heating step" also includes the same conditions as the heating or drying step described below.

The application method of the second treatment liquid is not particularly limited and can be appropriately selected according to the intended purpose, and can be performed in the same manner as the first treatment liquid application step and the first treatment liquid applying unit.

The application amount of the second treatment liquid per unit area of the fabric is not particularly limited and can be appropriately selected according to the intended purpose. However, from the viewpoint preventing permeation of the ink into the fabric, the application amount is preferably 5 $mg/cm^2$ or more and 15 $mg/cm^2$ or less, and is more preferably 6 $mg/cm^2$ or more and 14 $mg/cm^2$ or less. An application amount of the second treatment liquid with respect to the fabric of 5 $mg/cm^2$ or more is preferable from the viewpoint of improving the white concealability, and an application amount of 15 $mg/cm^2$ or less is preferable because a soft texture can be obtained.

<Ink Accommodating Unit>

The ink accommodating unit is a unit that accommodates the ink.

The ink accommodating unit may be an ink cartridge according to an embodiment of the present invention described below.

Because the ink is as described above, the description will be omitted.

<Ink Application Step and Ink Applying Unit>

The ink application step is a step for applying an ink to a fabric including an area in which the second treatment liquid has been applied, and includes the third step of the image recording method according to an embodiment of the present invention.

The ink applying unit is a unit that applies an ink to a fabric (including an area in which the second treatment liquid has been applied).

The ink application step is preferably performed by the ink applying unit.

In the image recording method, it is preferable that the second treatment liquid application step and the ink application step are performed separately. When the second treatment liquid application step and the ink application step are performed simultaneously, or the second treatment liquid and the ink are mixed, the concealability of the fabric base may decrease. Therefore, by separately performing the second treatment liquid application step and the ink application step, an effect of improving the concealability of the fabric base is obtained.

Furthermore, the ink application step is performed by applying, while the second treatment liquid is still in a wet state (wet-on-wet), the ink to the fabric including an area in which the second treatment liquid has been applied.

Herein, "the second treatment liquid is still in a wet state" refers to the condition (1) below, and may also refer to one of the conditions (2) and (3) below.

(1) A forced drying step is not provided between the second treatment liquid application step and the ink application step.
(2) After applying the second treatment liquid to the fabric, the ink is applied in a state where the surface temperature of the fabric is 32°C or lower.
(3) The ink is further applied in a state where 70% by mass or more of the solvent included in the second treatment liquid remains in the fabric.

However, "while the second treatment liquid is still in a wet state" does not include, as mentioned above, a case of simultaneously applying the second treatment liquid and the ink to the fabric (that is, simultaneously performing the second treatment liquid application step and the ink application step), and a case of mixing the second treatment liquid and the ink and then applying the mixture to the fabric.

As a result of performing the ink application step while the second treatment liquid that has been applied to the fabric is in a wet state, the resin that can be included in the ink can be suitably subjected to a crosslinking reaction. Even when the ink is applied while the second treatment liquid is still in a wet state, the film formed as a result of thickening of the second treatment liquid can be preferably maintained without mixing with the second treatment liquid.

Also, herein, a "forced drying step" does not include natural drying under the conditions of 5°C to 35°C and 5% to 90% relative humidity, and refers to artificially blowing air or artificially heating. In addition, it can be stated that even when the temperature and humidity are outside the conditions above, the second treatment liquid is "in a wet state" as long as the conditions (1) and (2) above are satisfied.

In the case of artificially heating, the heating temperature is a temperature outside that of the natural drying conditions, and for example, is above 35°C. Furthermore, in the case of artificially heating, the heating time is not particularly limited, and for example, is 1 minute or more. The "forced heating step" also includes the same conditions as the heating or drying step described below.

Note that, when the second treatment liquid application step is performed by applying, while the first treatment liquid that has been applied to the fabric is in a wet state, the second treatment liquid to an area in which the first treatment liquid has been applied, and the ink application step is performed by applying, while the second treatment liquid that has been applied to the fabric is in a wet state, the ink to an area in which the second treatment liquid has been applied, it is possible to preferably form an additional protective layer for preventing dye transfer from the fabric with first treatment liquid, and then, it is also possible to preferably form an additional ink receiving layer with the second treatment liquid.

The application method of the ink is not particularly limited and can be appropriately selected according to the intended purpose, and can be performed in the same manner as the first treatment liquid application step and the first treatment liquid applying unit.

The application amount of the ink per unit area of the fabric is not particularly limited and can be appropriately selected according to the intended purpose. However, from the viewpoint of the concealing properties of the fabric base, the application amount is preferably 10 mg/cm$^2$ or more and 30 mg/cm$^2$ or less, and is more preferably 15 mg/cm$^2$ or more and 25 mg/cm$^2$ or less.

An application amount of the ink with respect to the fabric of 10 mg/cm$^2$ or more is preferable from the viewpoint of the concealability of the fabric base, and an application amount of 30 mg/cm$^2$ or less is preferable from the viewpoint of obtaining a soft texture.

<Other Steps and Other Units>

Examples of steps other than the first treatment liquid application step, the second treatment liquid application step, and the ink application step include, but are not limited to, a drying step and a post-treatment liquid application step.

Examples of other units include, but are not limited to, a drying unit, a unit related to feeding and conveying of a recording medium, or discharging paper, and a post-treatment liquid applying unit.

<<Drying Step and Drying Unit>>

The drying step is a step for drying the first treatment liquid, the second treatment liquid, and the text printed surface and back surface of the fabric to which the ink has been applied.

The drying unit is a unit that dries the first treatment liquid, the second treatment liquid, and the text printed text

surface and back surface of the fabric to which the ink has been applied.

The drying step is preferably performed by the drying unit.

In image formation, the drying step is preferable to perform from the viewpoint that the fixing properties of the image on the fabric improve. Therefore, embodiments of the present invention provide such a printing method that includes the drying step of the image recording method according to an embodiment of the present invention.

The drying unit is not particularly limited and can be appropriately selected from among known drying units. Examples of the drying units include, but are not limited to, a roll heater, a drum heater, an infrared heater, a hot air generation device, and a heat press device.

Heating may be performed in the drying step, and the heating temperature is not particularly limited and can be appropriately selected according to the intended purpose. However, the temperature is preferably 100°C or higher and 140°C or lower.

When the heating temperature is 100°C or higher, it is easier to reduce the stickiness of the printed matter and ensure the fixing properties. Further, when the heating temperature is 140°C or lower, when a "dark-colored fabric" is used, it is easier to prevent bleeding of the dispersed dye and ensure the concealability of the fabric base.

Furthermore, the heating time is not particularly limited and can be appropriately selected according to the intended purpose. However, the heating time is preferably 1 minute or more, and is more preferably 1 minute or more and 5 minutes or less.

The drying step can be performed after text printing. Furthermore, the drying step is not performed between the first treatment liquid application step and the second treatment liquid application step, and between the second treatment liquid application step and the ink application step.

As described above, the second treatment liquid application step is performed while the first treatment liquid applied to the fabric is still in a wet state, and the ink application step is performed while the second treatment liquid is in a wet state. Therefore, the heating and drying steps are not included between the first treatment liquid application step and the second treatment liquid application step, and between the second treatment liquid application step and the ink application step. However, the first treatment liquid application step, the second treatment liquid application step, the ink application step, and the drying step may be consecutively performed in this order. This allows the ink layer to be preferably formed on the fabric, and high concealability of the fabric base can be obtained.

<<Second and Subsequent Color Ink Application Step and Second and Subsequent Color Ink Applying Unit>>

The second and subsequent color ink application step is a step for applying, after the ink application step, and in a case where second and subsequent color inks are to be applied, a second color ink on the first color ink after the first color ink has been applied. When the printing method includes the drying step, it is preferable that the second and subsequent color ink application step is a step for applying ink of the second and subsequent colors on the first color ink layer after the drying step.

The second and subsequent color ink applying unit is a unit that applies second and subsequent color inks on the first color ink.

The second and subsequent color ink application step is preferably performed by the second and subsequent color ink applying unit.

It is preferable that white ink is used as the first color ink and is the base of the second and subsequent color inks. In this case, the second and subsequent color inks that are used are not particularly limited, and can be appropriately selected from among known inks.

The application of "color ink" to an area of the fabric in which the white ink has been applied is preferable for forming a color image.

Furthermore, herein, "color" represents colors not including "white", and examples thereof include, but are not limited to Y (yellow), M (magenta), C (cyan), and K (black).

The application method of the color ink is not particularly limited and can be appropriately selected according to the intended purpose, and can be performed in the same manner as the first treatment liquid application step and the first treatment liquid applying means.

<<Post-Treatment Liquid Application Step and Post-Treatment Liquid Applying Unit>>

The post-treatment liquid application step is a step for forming a transparent layer after the ink application step.

The post-treatment liquid application step may be performed after the ink application step and then the drying step are performed.

The post-treatment liquid applying unit is a unit that forms a transparent layer after the ink is applied.

The post-treatment liquid application step is preferably performed by the post-treatment liquid applying unit.

The post-treatment liquid is not particularly limited and can be appropriately selected according to the intended

purpose. For example, the post-treatment liquid can be obtained by selecting and mixing, if preferable, organic solvents, water, resins, surfactants, antifoaming agents, pH adjusters, mold inhibitors, and rust inhibitors. Furthermore, the post-treatment liquid may be applied to the entire area of a recording area formed on the fabric, or may be applied to the area in which an image has been formed using the ink.

The method of applying the post-treatment liquid is not particularly limited, and examples include, but are not limited to, an inkjet method, a roller coating method, a blade coating method, a gravure coating method, a gravure offset coating method, a bar coating method, a roll coating method, a knife coating method, an air knife coating method, a comma coating method, a U comma coating method, an AKKU coating method, a smoothing coating method, a microgravure coating method, a reverse roll coating method, a four- or five-roll coating method, a dip coating method, a curtain coating method, a slide coating method, and a die coating method.

The image recording method and the image recording device according to embodiments of the present invention will be described in detail below with reference to the drawings. However, the present invention is not limited to them.

FIG. 1A is a schematic explanatory diagram illustrating an image recording device according to an embodiment of the present invention.

FIG. 1B is a schematic explanatory diagram illustrating an image recording device according to an embodiment of the present invention.

FIG. 2 is a flowchart of an operation of the image recording device illustrated in FIG. 1A or FIG. 1B.

FIG. 3 is a schematic explanatory diagram illustrating an overview of control in the image recording device illustrated in FIG. 1A or FIG. 1B.

Note that the ink application step, the first treatment liquid application step, and the second treatment liquid application step of the image recording method may be performed by the same image recording device, or may each be performed by independent devices (such as printing equipment).

An image recording device 100, which is an example of the image recording device according to an embodiment of the present invention includes a treatment liquid applying unit 110, an ink applying unit 120, a control unit 160, and a storage unit 170, and if preferable, may further include a post-treatment liquid applying unit 130, a drying unit 140, and a conveyance unit 150. The treatment liquid applying unit 110 applies the first treatment liquid or the second treatment liquid to a recording medium M. Note that, in FIG. 1A, only one treatment liquid applying unit 110 is illustrated, which is a mode in which the application of the first treatment liquid and the application of the second treatment liquid are performed independently.

The application method of the first treatment liquid and the second treatment liquid in the treatment liquid applying unit 110 is not particularly limited, and any known method can be used. Examples of methods that can be used include, but are not limited to, any of a method of immersing the recording medium in the first treatment liquid or the second treatment liquid (immersion coating method), a method of coating the first treatment liquid or the second treatment liquid with a roll coater or the like (roller coating method), a method of spraying the first treatment liquid or the second treatment liquid with a spray device or the like (spray coating method), and a method of spraying the first treatment liquid or the second treatment liquid using an inkjet method (inkjet coating method). Among these methods, the immersion coating method, the roller coating method, the spray coating method, and the inkjet coating methods are preferable from the viewpoint that the device configuration is simple, and the first treatment liquid and the second treatment liquid can be applied rapidly.

The ink applying unit 120 applies ink to a surface of the recording medium M in which the first treatment liquid and the second treatment liquid have been applied.

Examples of the ink applying unit 120 that can be used include, but are not limited to, a known inkjet head.

Note that, in FIG. 1A, although only one ink applying unit 120 is illustrated as the ink applying unit, an arbitrary plurality of additional heads that apply ink having the same configuration as the ink applying unit 120 may be provided as the ink applying unit. For example, if preferable, heads that apply white ink, or Y (yellow), M (magenta), C (cyan), or K (black) ink or the like may be provided.

The storage unit 170 is, for example, a hard disk drive (HDD), and holds data such as images to be printed. The control unit 160 of the image recording device 100 is, for example, a central processing unit (CPU) that issues instructions to the storage unit 170 and each control unit.

A treatment liquid application control unit 161 controls the drive of the treatment liquid applying unit 110 according to instructions from the control unit 160.

An ink application control unit 162 controls the drive of the ink applying unit 120 according to instructions from the control unit 160. Furthermore, when the image recording device 100 includes a plurality of ink applying units, the ink application control unit 162 also controls the drive of the plurality of ink applying units.

The post-treatment liquid applying unit 130 is capable of applying, to the surface of the recording medium M in which the ink has been applied, a post-treatment liquid to the area in which the ink has been applied. For example, in addition to an inkjet head, a spray or roller can also be used. Note that the post-treatment liquid applying unit 130 may be omitted.

The image recording device 100 may include a drying unit 140 that dries the printed surface and the back surface of the recording medium M in which the first treatment liquid, the second treatment liquid, and the ink have been applied. If preferable, a step for drying the recording medium M after applying an additional liquid containing the post-treatment liquid or before and after applying each liquid can also be included. Many known devices can be used as the device used for heating. Examples of the drying unit 140 include, but are not limited to, hot air heating, radiant heating, conduction heating, high frequency drying, microwave drying, heat pressing, and fixing roller devices. These devices may be used alone or in combination with others. The drying intensity is preferably set depending on the heat shrinkage characteristics, including the thickness and material of the recording medium. Among these devices, a heat press is preferable from the viewpoint of improving the robustness and shortening the heating time. Note that the drying unit 140 may be omitted.

The conveyance unit 150 conveys the recording medium M. The conveyance unit 150 is not particularly limited if it is capable of conveying the recording medium M, but examples thereof include a conveyance belt and a platen. Note that, if preferable, the conveyance unit 150 may be omitted.

Note that the image recording device 100 may include, if preferable, a fixing unit that heats and fixes the image formed on the recording medium M. The fixing unit is not particularly limited, but examples thereof include, but are not limited to, a fixing roller.

When a desktop printer is used as the image recording device, the treatment liquid applying unit and the post-treatment liquid applying unit may be provided with liquid accommodating units containing the first treatment liquid, the second treatment liquid, and the post-treatment liquid, and a liquid discharge head, and configured to apply the first treatment liquid, the second treatment liquid, and the post-treatment liquid using an inkjet method, like the case of using white ink and standard inks such as black (K), cyan (C), magenta (M), and yellow (Y) inks.

[Operation Example of Image Recording Device 100]

Next, the operation of the image recording device 100 will be described. FIG. 2 is a flowchart of an operation of the image recording device 100 illustrated in FIG. 1A or FIG. 1B.

Upon accepting an instruction to start image formation, the image recording device 100 in FIG. 1A starts an image formation operation.

In step S1 in FIG. 2, the conveyance unit 150 of the image recording device 100 in FIG. 1A conveys the recording medium M, and the treatment liquid applying unit 110 applies the first treatment liquid to the recording medium M ("first treatment liquid application step"). At this time, the treatment liquid applying unit 110 may apply the first treatment liquid to only the portion in which an image is to be formed, or may apply the first treatment liquid to the entire surface of the recording medium.

When the treatment liquid applying unit 110 applies the first treatment liquid to only the portion in which an image is to be formed, the application area is determined according to an instruction from the treatment liquid application control unit 161 or the control unit 160, and then the first treatment liquid is applied to the recording medium M.

When the treatment liquid applying unit 110 applies the first treatment liquid to the entire surface of the recording medium, the first treatment liquid is applied to the entire surface of the recording medium according to an instruction from the treatment liquid application control unit 161 or the control unit 160.

In step S2 in FIG. 2, the treatment liquid applying unit 110 applies the second treatment liquid to the recording medium M in which the first treatment liquid has been applied, and which has been conveyed by the conveyance unit 150 ("second treatment liquid application step"). At this time, the treatment liquid applying unit 110 applies the second treatment liquid to the portion in which the first treatment liquid has been applied. However, the second treatment liquid may be applied to the entire surface of the recording medium.

When the second treatment liquid is applied to the portion in which the first treatment liquid has been applied, the application area is determined according to an instruction from the treatment liquid application control unit 161 or the control unit 160, and then the second treatment liquid is applied to the recording medium M.

When the treatment liquid applying unit 110 applies the second treatment liquid to the entire surface of the recording medium, the second treatment liquid is applied to the entire surface of the recording medium according to an instruction from the treatment liquid application control unit 161 or the control unit 160.

In step S3 in FIG. 2, the ink applying unit 120 applies the ink to the recording medium M in which the first treatment liquid and the second treatment liquid have been applied, and which has been conveyed by the conveyance unit 150 ("ink application step"). At this time, the ink applying unit 120 applies the ink to the portion in which the first treatment liquid and the second treatment liquid have been applied. However, the ink may be applied to the entire surface of the recording medium.

When the ink is applied to only the portion in which an image is to be formed, the application area is determined according to an instruction from the ink application control unit 162 or the control unit 160, and then the ink applying unit 120 applies the ink.

When the ink applying unit 120 applies the ink to the entire surface of the recording medium, the ink is applied to the entire surface of the recording medium according to an instruction from the ink application control unit 162 or the control unit 160.

The image recording device 100 may be provided with a sensor that recognizes the position and location of the recording medium. As a result of providing the sensor that recognizes the position and location of the recording medium, it is possible for the treatment liquid applying unit 110 and the ink applying unit 120 to apply the first treatment liquid, the second treatment liquid, and the ink more efficiently to the recording medium in step S1, step S2, and step S3.

After step S3, a drying step may be provided for causing the conveyance unit 150 to convey the recording medium in which the first treatment liquid, the second treatment liquid, and the ink have been applied to the drying unit 140, and drying the recording medium. The drying unit 140 can be provided in the image recording method and the image recording device of the present embodiment if preferable.

If the drying step is not provided, the user may perform the drying manually or by using a separate drying device.

If the drying step is provided, the drying time and the drying temperature may be constant, or may be adjusted according to the application amount of the first treatment liquid, the second treatment liquid, and the ink. It is more preferable to perform adjustments according to the application amount of the first treatment liquid, the second treatment liquid, and the ink.

The image recording device 100 may be provided with a sensor that recognizes the application amount of the first treatment liquid, the second treatment liquid, and the ink that have been applied to the recording medium. As a result of providing the sensor, it is possible to set and adjust the drying time and the drying temperature according to the amount of the first treatment liquid, the second treatment liquid, and the ink that has been applied to the recording medium. Therefore, the drying unit 140 is capable of drying the recording medium more efficiently.

The sensor that recognizes the application amount of the first treatment liquid, the second treatment liquid, and the ink may be of recognizing the amount of liquid that is actually attached to the recording medium, or may be of recognizing the application amount by measuring the amount of liquid that has been applied to the recording medium by each applying units.

After drying the recording medium, the image recording device completes the image recording step. If preferable, a step that removes the recording medium from the image recording device, or a step that conveys the recording medium may also be performed.

FIG. 1B is a schematic explanatory diagram illustrating another image recording device according to an embodiment of the present invention.

An image recording device 200, which is another example of the image recording device according to an embodiment of the present invention, represents a mode in which the treatment liquid applying unit 110 of the image recording device 100 illustrated in FIG. 1A has been replaced with a first treatment liquid applying unit 210 and a second treatment liquid applying unit 211. Because the other configurations are the same as those of the image recording device 100 illustrated in FIG. 1A, a detailed description will be omitted.

In the image recording device 100 illustrated in FIG. 1A, the application of the first treatment liquid and the application of the second treatment liquid are independently performed. However, the image recording device 200 illustrated in FIG. 1B represents a mode in which the application of the first treatment liquid by the first treatment liquid applying unit 210 and the application of the second treatment liquid by the second treatment liquid applying unit 211 are consecutively performed.

Note that image formation, image recording, recording, text printing, and printing are all synonymous in the terminology of the present disclosure. Furthermore, the image recording device according to an embodiment of the present invention includes, unless specifically limited, both a serial type device that moves the discharge head, and a line type device that does not move the discharge head.

Moreover, the image recording device is not limited to only a desktop type, but also includes wide image recording devices that are capable of printing on an A0 size recording medium, and continuous feed printers that can use, for example, continuous paper or fabric that has been wound into a roll as the recording medium.

(Cartridge)

A cartridge according to an embodiment of the present invention is formed so as to accommodate the first treatment liquid, the second treatment liquid, and the ink used in the image recording method according to an embodiment of the present invention, and is preferably formed so as to accommodate the treatment liquids and the ink in a container. If preferable, the cartridge includes other members and the like that have been appropriately selected.

The cartridge has an advantage from the viewpoint that it is not necessary to directly touch the treatment liquids and the ink during operations such as ink replacement, and there is no concern of the hands or clothing becoming stained. Furthermore, foreign matter such as dirt can be prevented from entering the treatment liquids and the ink.

When cartridges that accommodate the first treatment liquid, the second treatment liquid, and the ink are used

in the image recording method according to an embodiment of the present invention, the plurality of cartridges may be used in an integrated configuration, or each cartridge may be independently used.

Furthermore, if one or more inks are included, when cartridges that accommodate the first treatment liquid, the second treatment liquid, and the one or more inks are used in the image recording method according to an embodiment of the present invention, the plurality of cartridges may be used in an integrated configuration, or each cartridge may be independently used.

The container used in the cartridge is not particularly limited, and the shape, structure, size, material, and the like can be appropriately selected according to the intended purpose. Examples of the container include, but are not limited to, plastic containers and ink bags formed using an aluminum laminate film or resin film.

FIG. 4 is a schematic cross-sectional view of an ink cartridge according to an embodiment of the present invention.

An example of the ink cartridge accommodating the ink will be described in detail with reference to FIG. 4. However, the ink cartridge according to an embodiment of the present invention is not limited to this.

An ink bag 241 is filled with an ink from an ink inlet 242, and after evacuation, the ink inlet 242 is fused closed. At the time of use, an ink outlet 243 made of a rubber member supplies ink by being pierced by a needle of the device body. The ink bag 241 is formed by a packaging member such as a non-permeable aluminum laminate film. The ink bag 241 is usually accommodated in a plastic cartridge case 244, and then is used as an ink cartridge 240 that is detachably equipped to the various image recording devices.

If the first treatment liquid or the second treatment liquid is placed in the ink cartridge 240 described above instead of the ink and used as a first treatment liquid cartridge or a second treatment liquid cartridge, it is possible to use the cartridges in the same way as the ink cartridge by detachably equipping the cartridges to the various image recording devices.

(Recorded Matter)

A recorded matter obtained by the image recording device or image recording method according to embodiments of the present invention has an image formed using the first treatment liquid, the second treatment liquid, and the ink on a fabric. Such a recorded matter is within the scope of the present invention.

The recorded matter is preferably a recorded matter that is recorded by an inkjet recording device and an inkjet recording method. In the present disclosure, the recorded matter may also be referred to as "printed matter" as the same meaning.

[Examples]

The present invention is described below by way of Examples, but the present invention is not limited in any way to these Examples.

Note that, unless otherwise specified, the preparation and evaluation of the various liquids were performed at a room temperature of 25°C and a humidity of 60%.

<Preparation of First Treatment Liquid>

The treatment liquids having the compositions presented in Table 1 below were prepared by a conventional method and filtered through a membrane filter (cellulose acetate membrane) having an average pore size of 1.2 μm to prepare the first treatment liquids 1-1 to 1-9. The units of the numerical values indicating the content of the compositions in Table 1 are "% by mass".

The details of the various materials presented in Table 1 below are as follows.

- Water -

  · Ion-exchanged water

- Surfactant -

  · SAG-503A: silicone surfactant, manufactured by Nissin Chemical Industry Co., Ltd.
  · Capstone FS-34: fluorine surfactant, manufactured by DuPont

- Lubricant -

· KM-9738A: dimethylpolysiloxane, manufactured by Shin-Etsu Chemical Co. Ltd.
· AQUACER 497: polyethylene oxide, manufactured by Mitsui Chemicals Inc.

- Thickener (associative viscoelasticity modifier) -

· UH-530: urethane-modified polyether, manufactured by San Nopco Ltd.

Table 1

| | | First Treatment Liquid | | | | | | | | |
|---|---|---|---|---|---|---|---|---|---|---|
| | | 1-1 | 1-2 | 1-3 | 1-4 | 1-5 | 1-6 | 1-7 | 1-8 | 1-9 |
| Organic solvent | Propylene glycol | | | | | | | | 20 | |
| Flocculant | Calcium nitrate tetrahydrate | | | | | | | | | 10 |
| Surfactant | SAG-503A | 0.5 | 0.5 | 0.5 | | | | 0.5 | | |
| | FS-34 | | | | | | 0.5 | | | |
| Lubricant | KM9738A | | 1 | | | 1 | | | | |
| | AQUACURE497 | | | | | | | 1 | | |
| Thickener | UH-530 | | | 1 | | | | | | |
| Water | | 99.5 | 98.5 | 98.5 | 100 | 99 | 99.9 | 98.5 | 80 | 90 |
| Total | | 100 | 100 | 100 | 100 | 100 | 100 | 100 | 100 | 100 |

<<Preparation of Second Treatment Liquid>>

The treatment liquids having the compositions presented in Table 2 below were prepared by a conventional method and filtered through a membrane filter (cellulose acetate membrane) having an average pore size of 1.2 μm to prepare the second treatment liquids 2-1 to 2-11. The units of the numerical values indicating the content of the compositions in Table 2 are "% by mass".

The details of the various materials presented in Table 2 below are as follows.

- Water -

· Ion-exchanged water

- Water-Soluble Solvent -

· Propylene glycol: boiling point 188°C
· 1,3-butanediol: boiling point 207°C
· Diethylene glycol: boiling point 244°C
· Glycerin: boiling point 290°C

- Surfactant -

· SAG-503A: silicone surfactant, manufactured by Nissin Chemical Industry Co., Ltd.

Table 2

| | | Second Treatment Liquid | | | | | | | | | | | |
|---|---|---|---|---|---|---|---|---|---|---|---|---|---|
| | | 2-1 | 2-2 | 2-3 | 2-4 | 2-5 | 2-6 | 2-7 | 2-8 | 2-9 | 2-10 | 2-11 | 2-12 |
| Water-soluble solvent | Propylene glycol | 38 | 30 | | 20 | 34 | | | 24 | 33 | 34 | 38 | |
| | 1,3-butanediol | | | 30 | | | 32 | 45 | | | | | |
| | Diethylene glycol | | | | 15 | | | | | | | | |
| | Glycerin | | | | | | | | 10 | | | | |
| Flocculant | Calcium nitrate tetrahydrate | 20 | | 20 | 25 | 10 | 20 | 7.5 | 20 | 20 | 20 | | 20 |
| | Ammonium lactate | | 27.5 | | | | | | | | | | |
| Surfactant | SAG-503A | 0.5 | 0.5 | 0.5 | 0.5 | 0.5 | 0.5 | 0.5 | 0.5 | 0.5 | 0.5 | 0.5 | 0.5 |
| Water | | 41.5 | 42 | 49.5 | 39.5 | 55.5 | 47.5 | 47 | 45.5 | 46.5 | 45.5 | 61.5 | 79.5 |
| Content of water-soluble solvent | | 38 | 30 | 30 | 35 | 34 | 32 | 45 | 34 | 33 | 34 | 38 | 0 |
| Total | | 100 | 100 | 100 | 100 | 100 | 100 | 100 | 100 | 100 | 100 | 100 | 100 |

<Preparation of White Pigment Dispersion>

A mixture of 40 parts by mass of titanium oxide (product name: JR-403, manufactured by Tayca Co. Ltd.), 8 parts by mass of a pigment dispersant (product name: TEGO Dispers 651, manufactured by Evonik Industries), and 52 parts by mass of water was dispersed in a bead mill (product name: Research Lab, manufactured by Simmar Enterprises Inc.) at 8 m/s for 5 minutes using zirconia beads having a diameter of 0.3 mm and a filling rate of 60% to obtain a white pigment dispersion (pigment solid concentration: 40% by mass).

The volume average particle diameter D50 of the white pigment dispersion was measured using a NANOTRAC Wave-EX 1500 (manufactured by MicrotracBEL Corp.), and was 250 nm.

<Preparation of Polyurethane Resin Emulsion>

To a 2 L volume reactor equipped with a stirrer, a thermometer, a nitrogen seal tube, and a cooler were added 100 parts by mass of methyl ethyl ketone, 345 parts by mass of polyester polyol (1) (polyol obtained from iPA/AA = 6/4 (molar ratio) and EG/NPG 1/9 (molar ratio), number average molecular weight: 2,000, average number of functional groups: 2, iPA: isophthalic acid, AA: adipic acid, EG: ethylene glycol, and NPG: neopentyl glycol), and 9.92 parts by mass of 2,2-dimethylpropionic acid (DMPA), which were uniformly mixed at 60°C.

Then, 45.1 parts by mass of triethylene glycol diisocyanate (TEGDI) and 0.08 parts by mass of dioctyltin dilaurate (DOTDL) were added, and a polyurethane solution was obtained after reacting at 72°C for 3 hours.

To the polyurethane solution were added 80 parts by mass of IPA, 220 parts by mass of MEK, 3.74 parts by mass of triethanolamine (TEA), and 596 parts by mass of water. Then, after phase inversion, the MEK and IPA were removed in a rotary evaporator to obtain a polyurethane resin emulsion.

After cooling the obtained aqueous emulsion to room temperature, ion-exchanged water and a sodium hydroxide aqueous solution were added to adjust the solid concentration to 30% by mass and the pH to 8.

The glass transition point (Tg) of the polyurethane resin emulsion 1 measured using a "Thermo plus EVO2" (manufactured by Rigaku Corp.) was -5°C.

<Preparation of Ink>

A mixture of 25.0% by mass of the white pigment dispersion (pigment solid concentration: 40% by mass), 30.0% by mass of the polyurethane resin emulsion (solid concentration: 30% by mass), 10.0% by mass of propylene glycol 10.0%, 10.0 parts by mass of 1,3-propanediol, 5.0% by mass of 3-methoxy-3-methyl-1-butanol, 1.0% by mass of 2-ethyl-1,3-hexanediol, 1.0% by mass of SAG-503A (silicone surfactant, Nissin Chemical Industry Co., Ltd.) as a surfactant, 0.1% by mass of a preservative (product name: Proxel LV, manufactured by Avecia), and a balance of high-purity water so that the total became 100% by mass was added to prepare an ink by a conventional method. Then, filtration was performed using a membrane filter (cellulose acetate membrane) having an average pore size of 5.0 μm to prepare the ink.

<Preparation of Printed Matter>

(Example 1)

The first treatment liquid 1-1 was filled into an automatic spray coating machine (EZPrep Pretreatment System for Direct-Garment Printing, manufactured by M&R), and the first treatment liquid 1-1 was applied to a polyester fabric (dark-colored dry T-shirt, Glimmer 00300-ACT Black, manufactured by Toms Co., Ltd.) cut out to an A4 size such that the attached amount was 10.0 $mg/cm^2$.

Immediately thereafter, the second treatment liquid 2-1 was filled into an inkjet printer Ri100 (manufactured by Ricoh Co., Ltd.), and the second treatment liquid 2-1 was applied to the area of the dark-colored polyester fabric in which the first treatment liquid 1-1 had been applied such that the attached amount was 10.0 $mg/cm^2$.

In addition, immediately thereafter, the ink was filled into an inkjet printer Ri2000 (manufactured by Ricoh Co., Ltd.), and a solid image was formed by applying the ink to the area of the dark-colored polyester fabric in which the second treatment liquid 2-1 had been applied such that the attached amount was 200 $mg/cm^2$.

Then, after pressing in a heat press (Clam/Hover Press, manufactured by STAHLS' Hotronix) set to 110°C at 400 $gf/cm^2$, drying was performed for 120 seconds to prepare the printed matter of Example 1.

The preparation conditions of Examples 1 to 14 and Comparative Examples 1 to 3 were as presented in Table 3.

(Examples 2 to 14)

Except for changing the conditions of Example 1 to those presented in Table 3, the printed matters of Examples

2 to 14 were prepared in the same manner as in Example 1.

(Example 15)

Except for changing the dark-colored polyester fabric to a light-colored polyester fabric (light-colored dry T-shirt (light pink), Glimmer 00300-ACT, manufactured by Toms Co., Ltd.) and changing the conditions to those presented in Table 3, the printed matter of Example 15 was prepared in the same manner as in Example 1.

Table 3

| | Print Medium | First Treatment Liquid | Second Treatment Liquid | Ink | Drying Temperature (°C) | Printing Method |
|---|---|---|---|---|---|---|
| Example 1 | Dark-colored polyester | 1-1 | 2-1 | White ink | 110 | No drying step between first, second and third steps |
| Example 2 | Dark-colored polyester | 1-1 | 2-2 | | 110 | No drying step between first, second and third steps |
| Example 3 | Dark-colored polyester | 1-2 | 2-3 | | 110 | No drying step between first, second and third steps |
| Example 4 | Dark-colored polyester | 1-1 | 2-4 | | 110 | No drying step between first, second and third steps |
| Example 5 | Dark-colored polyester | 1-3 | 2-1 | | 110 | No drying step between first, second and third steps |
| Example 6 | Dark-colored polyester | 1-4 | 2-5 | | 110 | No drying step between first, second and third steps |
| Example 7 | Dark-colored polyester | 1-5 | 2-6 | | 110 | No drying step between first, second and third steps |
| Example 8 | Dark-colored polyester | 1-5 | 2-7 | | 110 | No drying step between first, second and third steps |
| Example 9 | Dark-colored polyester | 1-4 | 2-8 | | 110 | No drying step between first, second and third steps |
| Example 10 | Dark-colored polyester | 1-6 | 2-9 | | 110 | No drying step between first, second and third steps |

(continued)

| | Print Medium | First Treatment Liquid | Second Treatment Liquid | Ink | Drying Temperature (°C) | Printing Method |
|---|---|---|---|---|---|---|
| Example 11 | Dark-colored polyester | 1-7 | 2-3 | | 100 | No drying step between first, second and third steps |
| Example 12 | Dark-colored polyester | 1-7 | 2-3 | | 130 | No drying step between first, second and third steps |
| Example 13 | Dark-colored polyester | 1-7 | 2-3 | | 140 | No drying step between first, second and third steps |
| Example 14 | Dark-colored polyester | 1-7 | 2-3 | | 90 | No drying step between first, second and third steps |
| Example 15 | Light-colored polyester | 1-7 | 2-3 | | 130 | No drying step between first, second and third steps |
| Comparative Example 1 | Dark-colored polyester | 1-2 | 2-10 | | 110 | Includes drying step after second step |
| Comparative Example 2 | Dark-colored polyester | 1-8 | 2-10 | | 110 | No drying step between first, second and third steps |
| Comparative Example 3 | Dark-colored polyester | 1-9 | 2-11 | | 110 | No drying step between first, second and third steps |
| Comparative Example 4 | Dark-colored polyester | 1-2 | 2-10 | | 110 | Includes drying step after first step |
| Comparative Example 5 | Dark-colored polyester | 1-8 | 2-12 | | 110 | No drying step between first, second and third steps |

(Comparative Example 1)

The first treatment liquid 1-2 was filled into an automatic spray coating machine (EZPrep Pretreatment System for Direct-Garment Printing, manufactured by M&R), and the first treatment liquid 1-2 was applied to a polyester fabric cut out to an A4 size such that the attached amount was 10.0 mg/$cm^2$.

Immediately thereafter, the second treatment liquid 2-10 was filled into an inkjet printer Ri100 (manufactured by Ricoh Co., Ltd.), and the second treatment liquid 2-10 was applied to the area of the dark-colored polyester fabric in which the first treatment liquid 1-2 had been applied such that the attached amount was 10.0 mg/$cm^2$.

Then, after pressing in a heat press (Clam/Hover Press, manufactured by STAHLS' Hotronix) set to 110°C at 400 gf/$cm^2$, drying was performed for 90 seconds.

In addition, the ink was filled into an inkjet printer Ri2000 (manufactured by Ricoh Co., Ltd.), and a solid image

was formed by applying the ink to the area of the dark-colored polyester fabric in which the second treatment liquid 2-10 had been applied such that the attached amount was 200 mg/cm$^2$.

Then, after pressing in a heat press (Clam/Hover Press, manufactured by STAHLS' Hotronix) set to 110°C at 400 gf/cm$^2$, drying was performed for 120 seconds to prepare the printed matter of Comparative Example 1.

(Comparative Examples 2 to 5)

Except for changing the conditions of Example 1 to those presented in Table 3, the printed matters of Comparative Examples 2 to 5 were prepared in the same manner as in Example 1.

The "concealability of the fabric base", "dry rub robustness", and "stickiness of the printed matter" of the printed matters prepared in the Examples and Comparative Examples were evaluated as follows. The evaluation results are presented in Table 4.

Table 4

| | Base Concealability | Dry Rub Robustness | Stickiness of Printed Article |
|---|---|---|---|
| Example 1 | B+ | B- | B+ |
| Example 2 | B- | B+ | A |
| Example 3 | A | A | A |
| Example 4 | B+ | B- | B- |
| Example 5 | A | B+ | B+ |
| Example 6 | B- | B+ | A |
| Example 7 | B+ | A | A |
| Example 8 | B- | B+ | B+ |
| Example 9 | B- | B- | B- |
| Example 10 | B- | B+ | A |
| Example 11 | A | B+ | B+ |
| Example 12 | B+ | A | A |
| Example 13 | B- | A | A |
| Example 14 | A | B- | B- |
| Example 15 | B+ | A | A |
| Comparative Example 1 | C | A | A |
| Comparative Example 2 | B- | C | C |
| Comparative Example 3 | C | B- | B+ |
| Comparative Example 4 | C | A | B- |
| Comparative Example 5 | B- | C | A |

<Concealability of Fabric Base>

The concealability of the fabric base was evaluated for the printed matters prepared in the Examples and Comparative Examples by performing a colorimetric measurement using an X-rite Exact (manufactured by X-Rite Inc.) and calculating the concealability of the fabric base according to the formula below. Note that a "B-" or better was defined as an implementable level.

$$\text{Concealability of fabric base (\%)} = [(\text{OD of original fabric} - \text{OD of solid image}) / \text{OD of original fabric}] \times 100$$

[Evaluation Criteria]

A: The concealability of the fabric base is 90% or more

B+: The concealability of the fabric base is 85% or more and less than 90%

B-: The concealability of the fabric base is 80% or more and less than 85%

C: The concealability of the fabric base is less than 80%

<Dry Rub Robustness>

A dry rub robustness test based on JIS L0849 Type II was carried out for the printed matters prepared in the Examples and Comparative Examples, and the dry rub robustness was evaluated based on the following evaluation criteria. Note that a "B-" or better was defined as an implementable level.

(Evaluation Criteria)

A: Grade 3.5 or higher
B+: Grade 3.0
B-: Grade 2.5
C: Grade 2.0 or lower

<Stickiness of Printed Matter>

The stickiness of the printed matters was evaluated based on the following evaluation criteria for the printed matters prepared in the Examples and Comparative Examples. Note that a "B-" or better was defined as an implementable level.

[Evaluation Criteria]

A: No stickiness at all when touching the printed surface
B+: Slightly sticky when touching the printed surface
B+: Sticky when touching the printed surface
C: Touched portion of the printed surface becomes wet

The printed matters of Examples 1 to 15 had an implementable level of "B-" or better for each of the evaluations of the concealability of the fabric base, the dry rub robustness, and the stickiness of the printed matter.
Although the first treatment liquid and the second treatment liquid used in Examples 11 to 15 were the same, there were differences in the temperature when drying the solid image. The printed matters of Example 11, Example 12, and Example 15, which were dried at 100 to 130°C each had an evaluation of the base concealability, the dry rub robustness, and the stickiness of the printed matter of "B+" or better. However, in Example 13, which was dried at 140°C, the evaluation of the base concealability was "B-". Further, in Example 14, which was dried at 90°C, the evaluations of the dry rub robustness and the stickiness of the printed matter were "B-".
In the printed matter of Example 4, which was prepared using a first treatment liquid not containing a lubricant, and a second treatment liquid containing a water-soluble solvent having a boiling point of 240°C or higher, none of the evaluations of the base concealability, dry rub robustness, and stickiness of the printed matter were "A". However, each of the above evaluations were "B-" or higher, and were at an implementable level.
In the printed matter of Example 8, which was prepared using a first treatment liquid not containing a surfactant, and a second treatment liquid having a large content of a water-soluble solvent, none of the evaluations of the base concealability, dry rub robustness, and stickiness of the printed matter were "A". However, each of the above evaluations were "B-" or higher, and were at an implementable level.

In the printed matter of Example 9, which was prepared using a first treatment liquid not containing a surfactant or a lubricant, and a second treatment liquid containing a water-soluble solvent having a boiling point of 240°C or higher, none of the evaluations of the base concealability, dry rub robustness, and stickiness of the printed matter were "A". However, each of the above evaluations were "B-" or higher, and were at an implementable level.

The printed matter of Comparative Example 1 included the drying step after the second step. Therefore, the reactivity of the flocculant and the ink decreased, and the concealability of the fabric base was inferior.

The printed matter of Comparative Example 2 substantially included an organic solvent in the first treatment liquid. Therefore, the ink could not be sufficiently fixed in the drying step, which resulted in inferior dry rub robustness and stickiness.

The printed matter of Comparative Example 3 did not include a flocculant in the second treatment liquid. Therefore, the ink permeated into the fabric, and the concealability of the fabric base was inferior.

The printed matter of Comparative Example 4 included the drying step after the first step. Therefore, the reactivity of the flocculant and the ink decreased, and the concealability of the fabric base was inferior.

The printed matter of Comparative Example 5 did not include a water-soluble solvent in the second treatment liquid, and the dry rub robustness was inferior.

The above demonstrates that the image recording method of the present embodiment is capable of achieving, with respect to a fabric, both concealability of the fabric base and robustness without stickiness of the printed matter.

Aspects in the present invention are as follows.

A first aspect is an image recording method comprising: firstly applying a first treatment liquid containing water and substantially free of organic solvent to a fabric; secondly applying a second treatment liquid containing water, a water-soluble solvent, and a flocculant to an area in which the first treatment liquid has been applied; and thirdly applying an ink to an area in which the second treatment liquid has been applied, wherein drying is not performed between the firstly applying and the secondly applying, and between the secondly applying and the thirdly applying.

A second aspect is the image recording method according to the first aspect, wherein the fabric is a dark-colored or light-colored chemical fiber fabric.

A third aspect is the image recording method according to the second aspect, wherein the chemical fiber fabric is a polyester fabric.

A fourth aspect is the image recording method according to any one of the first to third aspects, wherein the first treatment liquid further contains a silicone surfactant.

A fifth aspect is the image recording method according to any one of the first to fourth aspects, wherein the first treatment liquid contains at least one of a lubricant and a thickener.

A sixth aspect is the image recording method according to any one of the first to fifth aspects, wherein the water-soluble solvent in the second treatment liquid has a boiling point of less than 240°C.

A seventh aspect is the image recording method according to any one of the first to sixth aspects, wherein a content of the water-soluble solvent in the second treatment liquid is 35% by mass or less with respect to a total amount of the second treatment liquid.

An eighth aspect is the image recording method according to any one of the first to seventh aspects, wherein the flocculant in the second treatment liquid is an inorganic salt.

A ninth aspect is the image recording method according to any one of the first to eighth aspects, wherein a content of the flocculant in the second treatment liquid is 10% by mass or more and 25% by mass or less with respect to a total amount of the second treatment liquid.

A tenth aspect is the image recording method according to any one of the first to ninth aspects, wherein the ink contains a colorant, a water-soluble solvent, a resin emulsion, and a silicone surfactant.

An eleventh aspect is a printing method comprising: forming an image, by the image recording method according to any one of the first to tenth aspects, on the fabric; and drying the formed image by heating, wherein a heating temperature in the drying is 100°C or more and 140°C or less.

The image recording method according to the first to tenth aspects, and the printing method according to the eleventh aspect solve the problems of the conventional technique, and are capable of achieving the object of the present embodiment.

Any one of the above-described operations may be performed in various other ways, for example, in an order different from the one described above.

## Claims

**1.** An image recording method comprising:

firstly applying (S1) a first treatment liquid containing water and substantially free of organic solvent to a fabric;

secondly applying (S2) a second treatment liquid containing water, a water-soluble solvent, and a flocculant to an area in which the first treatment liquid has been applied; and
thirdly applying (S3) an ink to an area in which the second treatment liquid has been applied,
wherein drying is not performed between the firstly applying and the secondly applying, and between the secondly applying and the thirdly applying.

**2.** The image recording method according to claim 1, wherein the fabric is a dark-colored or light-colored chemical fiber fabric.

**3.** The image recording method according to claim 2, wherein the chemical fiber fabric is a polyester fabric.

**4.** The image recording method according to any one of claims 1 to 3, wherein the first treatment liquid further contains a silicone surfactant.

**5.** The image recording method according to any one of claims 1 to 4, wherein the first treatment liquid further contains at least one of a lubricant and a thickener.

**6.** The image recording method according to any one of claims 1 to 5, wherein the water-soluble solvent in the second treatment liquid has a boiling point of less than 240°C.

**7.** The image recording method according to any one of claims 1 to 6, wherein a content of the water-soluble solvent in the second treatment liquid is 35% by mass or less with respect to a total amount of the second treatment liquid.

**8.** The image recording method according to any one of claims 1 to 7, wherein the flocculant in the second treatment liquid is an inorganic salt.

**9.** The image recording method according to any one of claims 1 to 8, wherein a content of the flocculant in the second treatment liquid is 10% by mass or more and 25% by mass or less with respect to a total amount of the second treatment liquid.

**10.** The image recording method according to any one of claims 1 to 9, wherein the ink contains a colorant, a water-soluble solvent, a resin emulsion, and a silicone surfactant.

**11.** A printing method comprising:

forming an image, by the image recording method according to any one of claims 1 to 10, on the fabric; and drying the formed image by heating,
wherein a heating temperature in the drying is 100°C or more and 140°C or less.

FIG. 1A

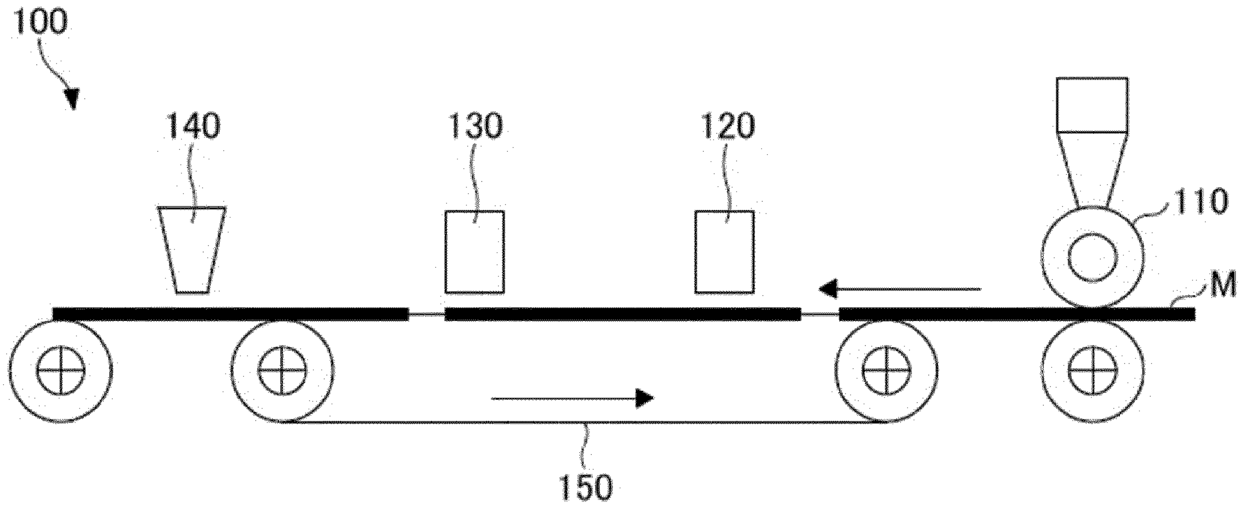


FIG. 1B

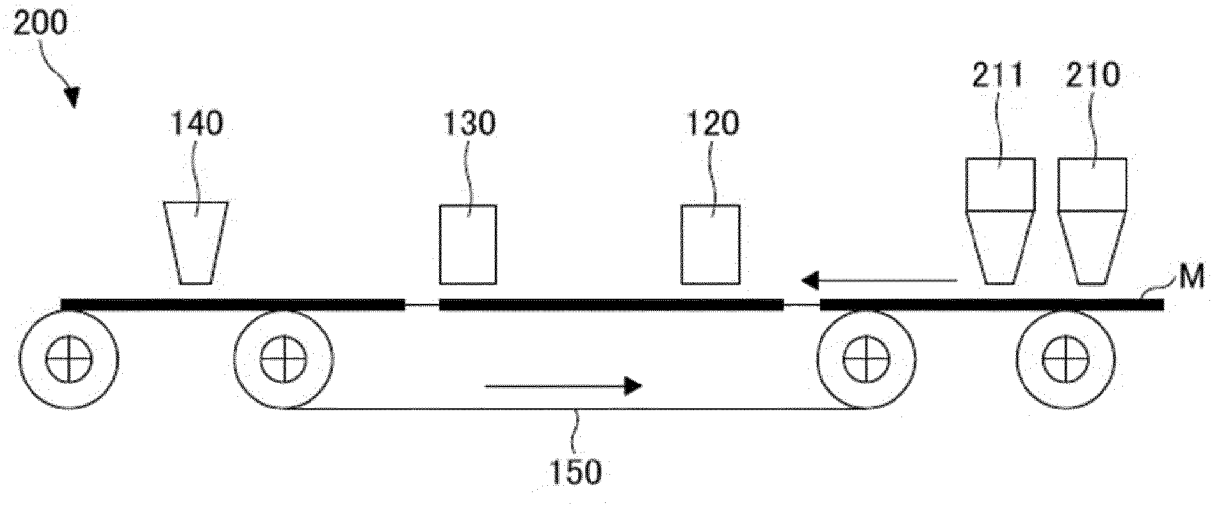

FIG. 2

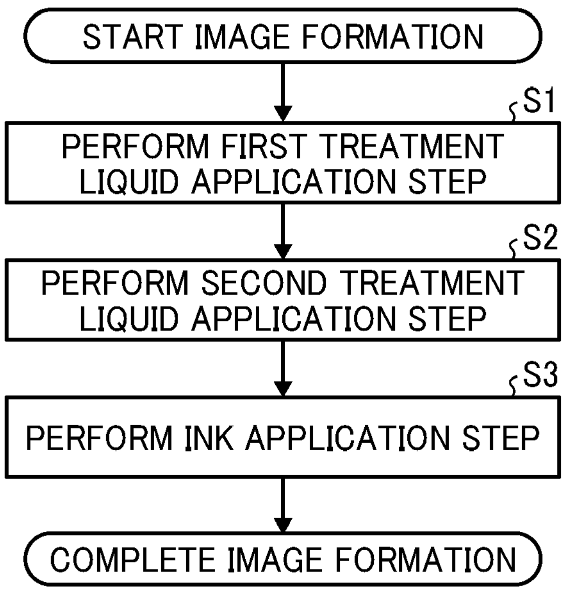
START IMAGE FORMATION
S1
PERFORM FIRST TREATMENT LIQUID APPLICATION STEP
S2
PERFORM SECOND TREATMENT LIQUID APPLICATION STEP
S3
PERFORM INK APPLICATION STEP
COMPLETE IMAGE FORMATION

FIG. 3

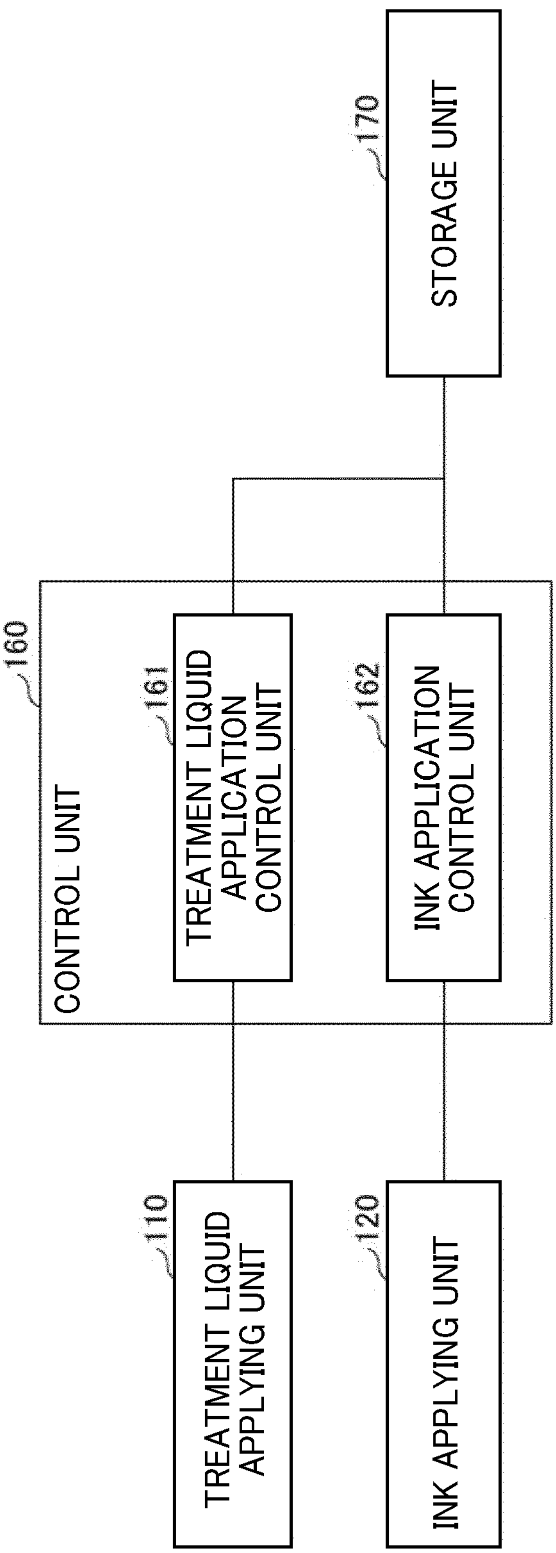
110
TREATMENT LIQUID APPLYING UNIT
120
INK APPLYING UNIT
160
CONTROL UNIT
161
TREATMENT LIQUID APPLICATION CONTROL UNIT
162
INK APPLICATION CONTROL UNIT
170
STORAGE UNIT

FIG. 4

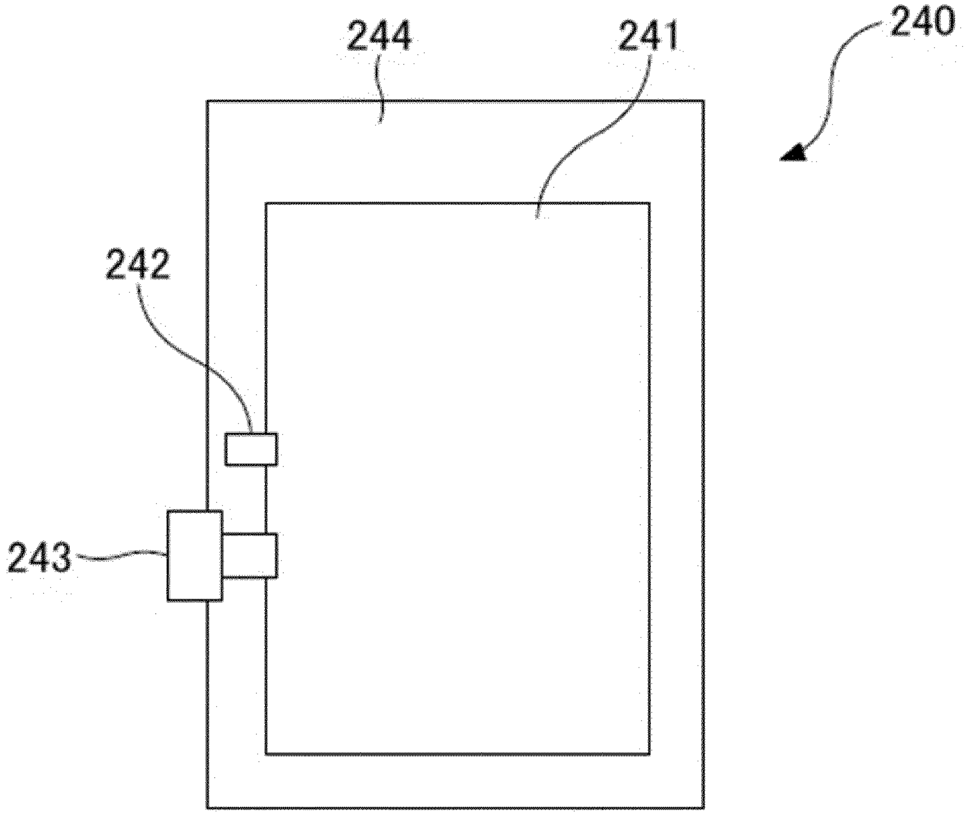

Europäisches Patentamt
European Patent Office
Office européen des brevets

# EUROPEAN SEARCH REPORT

Application Number
EP 23 21 7349

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2022/182358 A1 (HEWLETT PACKARD DEVELOPMENT CO [US]) 1 September 2022 (2022-09-01) * paragraph [0001] - paragraph [0193]; tables 1-4 * ----- | 1,11 | INV. C09D11/54 C09D11/102 C09D11/322 C09D11/38 C09D11/40 D06P5/30 D06P5/00 D06P5/20 D06P1/44 D06P1/52 D06P1/673 |
| X | US 2022/403594 A1 (HIRADE TOMOHIRO [JP] ET AL) 22 December 2022 (2022-12-22) * paragraph [0172] - paragraph [0187]; tables 1-4 * ----- | 1-10 | |

TECHNICAL FIELDS SEARCHED (IPC)

C09D
D06P

The present search report has been drawn up for all claims

| Place of search | Date of completion of the search | Examiner |
|---|---|---|
| The Hague | 22 May 2024 | Massella, Daniele |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

2

EPO FORM 1503 03.82 (P04C01)

# ANNEX TO THE EUROPEAN SEARCH REPORT ON EUROPEAN PATENT APPLICATION NO.

EP 23 21 7349

This annex lists the patent family members relating to the patent documents cited in the above-mentioned European search report. The members are as contained in the European Patent Office EDP file on The European Patent Office is in no way liable for these particulars which are merely given for the purpose of information.

22-05-2024

| Patent document cited in search report | Publication date | Patent family member(s) | Publication date |
|---|---|---|---|
| WO 2022182358 A1 | 01-09-2022 | NONE | |
| US 2022403594 A1 | 22-12-2022 | JP 2023002279 A | 10-01-2023 |
| | | US 2022403594 A1 | 22-12-2022 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2020139242 A
- WO 2021055700 A